(19) Europäisches Patentamt
European Patent Office
Office européen des brevets

(11) EP 0 697 415 B1

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.[7]: **C08B 37/16**, G01N 30/48, B01J 20/24

(21) Anmeldenummer: **95112935.2**

(22) Anmeldetag: **17.08.1995**

(54) **Cyclodextrinderivate mit mindestens einem stickstoffhaltigen Heterozyklus, ihre Herstellung und Verwendung**

Cyclodextrin derivatives with at least one nitrogen containing heterocycle, their preparation and use

Dérivés de cyclodextrine avec au moins un hétérocycle azoté, leur préparation et leur application

(84) Benannte Vertragsstaaten:
**BE DE FR GB IT NL**

(30) Priorität: **18.08.1994 DE 4429229**

(43) Veröffentlichungstag der Anmeldung:
**21.02.1996 Patentblatt 1996/08**

(73) Patentinhaber: **Consortium für elektrochemische Industrie GmbH**
**81379 München (DE)**

(72) Erfinder:
- **Reuscher, Helmut, Dr.**
  **D-84547 Emmerting (DE)**
- **Hirsenkorn, Rolf, Dr.**
  **D-81477 München (DE)**
- **Haas, Wolfgang, Dr.**
  **D-84503 Altötting (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
- **TETRAHEDRON LETTERS, Bd. 21, 1980 GB, Seiten 2721-2724, M. KOJIMA ET AL. 'The cyclodextrin-nicotinamide compound as a dehydrogenase model simulating apoenzyme-coenzyme-substrate ternary complex system'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 697 415 B1

Printed by Jouve, 75001 PARIS (FR)

## Beschreibung

Die Erfindung betrifft Cyclodextrinderivate mit mindestens einem stickstoffhaltigen Heterozyklus, ihre Herstellung und Verwendung.

Es sind bereits eine Reihe von reaktiven Cyclodextrinderivaten sowie Verfahren zu ihrer Herstellung bekannt. So beschreibt die EP-A-483380 der Fa. Toppan Printing eine Methode zur Herstellung cyclodextrinhaltiger Polymere, bei der Aldehydgruppen in geschützter oder ungeschützter Form ins Cyclodextrin eingebracht werden, die dann mit den nukleophilen Hydroxylgruppen eines Polymers reagieren. Die Anbindung von Cyclodextrinen an Polymere über eine Acetalbindung, wie in der Patentanmeldung EP-A-483380 beschrieben, ist wegen der bekannten Labilität von Acetalen unter sauren Bedingungen nicht vorteilhaft.

A. Deratani und B. Pöpping (Makromol. Chem., Rapid Commun. 13, 237-41 (1992)) beschreiben die Darstellung eines Cyclodextrin-Chlorhydrins (3-Chlor-2-hydroxypropyl-Cyclodextrinderivat) durch Umsetzung von β-Cyclodextrin im wäßrigen Milieu mit Epichlorhydrin unter Lewis-saueren Bedingungen mit $Zn(BF_4)_2$ als Katalysator. Unter basischen Bedingungen ist dieses Derivat in der Lage mit Nukleophilen wie z.B. $OH^-$ -Ionen (Natronlauge) zu reagieren. Nachteiligerweise wurde bei der Umsetzung von Cyclodextrin mit Epichlorhydrin unter Lewis-sauren Bedingungen nur ein sehr geringer Einbau von Epichlorhydrin erreicht. Deshalb mußte mit einem sehr hohen Überschuß an Epichlorhydrin gearbeitet werden, was zwangsläufig zu einer großen Menge an äußert toxischen bzw.krebserregenden Nebenprodukten führt, die abgetrennt und vernichtet werden müssen.

Die Erfindung betrifft Cyclodextrinderivate, die
dadurch gekennzeichnet sind, daß sie mindestens einen stickstoffhaltigen Heterozyklus mit mindestens einem elektrophilen Zentrum enthalten, wobei
die elektrophilen Zentren gleich oder verschieden sind und Kohlenstoffatome sind, an denen Halogen, insbesondere F, Cl, oder ein Ammoniumsubstituent, insbesondere Trialkylammonium oder ein substituierter oder unsubstituierter Pyridinium-Substituent, kovalent gebunden ist.

vorzugsweise umfaßt der stickstoffhaltige Heterozyklus ein bis 3 elektrophile Zentren.

Die Substituentenverteilung der erfindungsgemäßen Substituenten am Cyclodextrin ist vorzugsweise unselektiv.

Vorzugsweise genügen die erfindungsgemäßen Cyclodextrinderivate der folgenden Formel I:

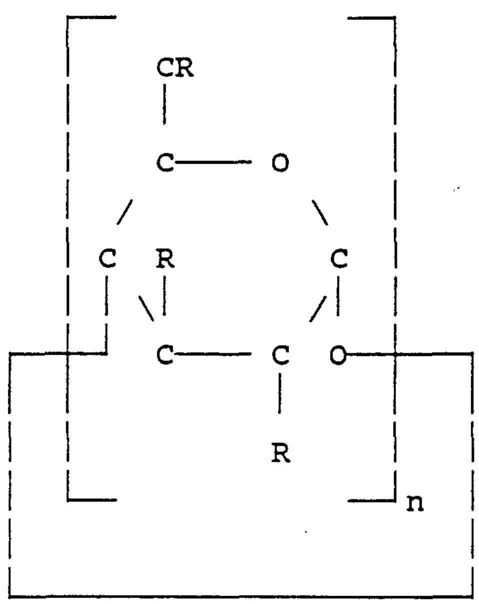

(I),

wobei R OH oder $OR^1$ oder $R^2$ bedeutet und

$R^1$ ein hydrophiler Rest ist, welcher gleich oder verschieden sein kann und

$R^2$ ein entweder direkt angeknüpfter oder ein über einen Spacer mittels einer Ether, Thioether, Ester oder Amin-Bindung angeknüpfter stickstoffhaltiger Heterocyclus ist,

wobei der Spacer ein Alkyl bzw. Hydroxyalkylrest mit 1-12 Kohlenstoffatomen ist, der über eine Ether, Thioether, Ester oder Amin-Bindung an die Anhydroglukose gebunden ist und

der stickstoffhaltige Heterocyclus mindestens einen Halogen- oder einen Ammonium-Substituenten umfaßt und mindestens einmal pro Cyclodextrin vorhanden ist und

n 6, 7 oder 8 bedeutet .

Vorzugsweise ist $R^1$ gleich oder verschieden und bedeutet Methyl, Ethyl, n- oder i-Propyl, n- oder i-Butyl, $C_2$-$C_6$-Hydroxyalkyl wie Hydroxethyl, Hydroxy-i-propyl, Hydroxy-n-propyl, $C_3$-$C_6$-Oligohydroxyalkyl wie Dihydroxy-i-propyl, Dihydroxy-n-propyl, $C_1$-$C_4$-Carboxyalkyl (in Form der freien Säure oder als Alkalisalz) wie beispielsweise Carboxymethyl, Carboxyethyl, Carboxy-i-propyl, Carboxy-n-propyl oder ein Alkalisalz der genannten Carboxyalkylsubstituenten, Acetyl, Propionyl, Butyryl, Sulfat, $C_1$-$C_4$-Sulfonsäurealkyl (in Form der freien Säure oder als Alkalisalz), $C_2$-$C_4$-Carboxyhydroxyalkyl (in Form der freien Säure oder als Alkalisalz), $C_2$-$C_4$-Sulfonsäurehydroxyalkyl (in Form der freien Säure oder als Alkalisalz) und Oxalyl, Malonyl, Succinyl, Glutaryl, Adipinyl (in Form der freien Säure oder als Alkalisalz).

Vorzugsweise ist $R^2$ gleich oder verschieden und bedeutet $-R^3_m-(CHR^4)_o-R^5-R^6$, wobei

$R^3$ gleich oder verschieden ist und O,

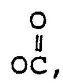

S, NH, oder $NR^7$ bedeutet und

$R^7$ gleich oder verschieden ist und $C_1$-$C_6$-Alkyl bedeutet und

$R^4$ gleich oder verschieden ist und H oder OH bedeutet und

$R^5$ NH, $NR^7$, S, O, oder

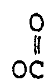

besonders bevorzugt O bedeutet, und

$R^6$ für den Fall das $R^5$ NH, $NR^7$, S, oder O bedeutet entweder

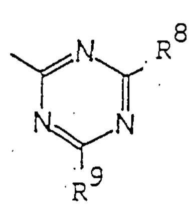

ist,

wobei $R^8$ und $R^9$ gleich oder verschieden sind und Halogen, bevorzugt Cl oder F bedeuten oder

$R^8$ $NR^{10}R^{11}$, OH, OAlkali, $OR^7$, O(i-$C_3H_6$), $OCH_2CH_2OCH_3$, $SO_3H$ bedeutet und

$R^9$ Halogen insbesondere Cl oder F oder Ammoniumsubstituent, insbesondere Trialkylammonium oder substituierte oder unsubstituierte Pyridinium- Substituenten, wie z.B.

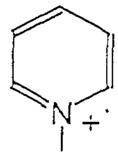 oder 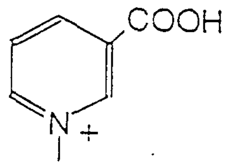 oder 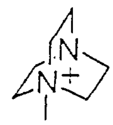 oder $-N^{+}(C_1-C_6Alkyl)_3$

bedeutet und

$R^{10}$ Wasserstoff oder aliphatischer Rest, vorzugsweise C1-C4-Alkylrest, welcher durch $OCH_3$, $OC_2H_5$, COOH, $OSO_3H$, $SO_3H$, $OCH_2CH_2SO_2CH_2CH_2OSO_3H$, $OCH_2CH_2SO_2CH{=}CH_2$, $OCH_2CH_2SO_2CH_2CH_2Cl$, $SO_2CH_2CH_2OSO_3H$, $SO_2CH{=}CH_2$ substituiert sein kann, oder cycloaliphatischer Rest vorzugsweise 5- bis 6- gliedriger Cycloalkylrest oder araliphatischer Rest vorzugsweise Reste der Formel

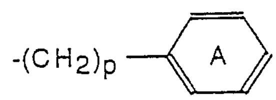

bedeutet,

wobei p = 1-4 bedeutet und der Rest A beispielsweise durch Cl, $NO_2$, COOH, $SO_3H$, $CH_3$, $OCH_3$, $SO_2CH_2CH_2OSO_3H$,
$SO_2CH{=}CH_2$, $CH_2SO_2CH_2CH_2OSO_3H$, $CH_2SO_2CH{=}CH_2$ substituiert sein kann, und

$R^{11}$ die für $R^{10}$ genannten Bedeutungen hat oder Phenylrest oder substituierter Phenylrest vorzugsweise durch Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$ substituierter Phenylrest bedeutet
oder $R^6$

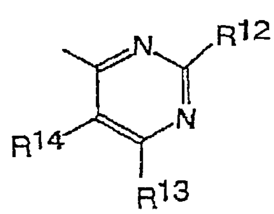

ist,
wobei

$R^{12}$, $R^{13}$ und $R^{14}$ gleich oder verschieden sind und Halogen vorzugsweise Cl oder F bedeuten,
bzw. $R^6$ für den Fall, daß $R^5$

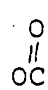

bedeutet

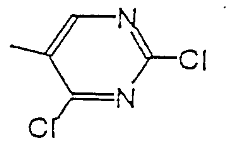

oder

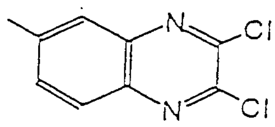

bedeutet und

o eine ganze Zahl von 0 bis 12 ist und

m 0 oder 1 ist, wobei

für o=0 auch m=0 gilt.

Besonders bevorzugte erfindungsgemäße Cyclodextrinderivate sind 2,4-Dichlor-1,3,5-triazinyl-Cyclodextrine, 2-Chlor-4-hydroxy-1,3,5-triazinyl-Cyclodextrine (Natrium-Salze), 2-Fluor-4-hydroxy-1,3,5-triazinyl-Cyclodextrine (Natrium-Salze), 2,4,5-Trichlorpyrimidyl-Cyclodextrine, 5-Chlor-2,4-difluorpyrimidyl-Cyclodextrine, 6-(2,3-Dichlor)-chinoxalinoyl-Cyclodextrine, 5-(2,4-Dichlor)-pyrimidinoyl-Cyclodextrine, 2-Amino-4-chlor-1,3,5-triazinyl-Cyclodextrine, 2-Chlor-4-ethylamino-1,3,5-triazinyl-Cyclodextrine, 2-Chlor-4-diethylamino-1,3,5-triazinyl-Cyclodextrine, 2-Chlor-4-methoxy-1,3,5-triazinyl-Cyclodextrine.

Die Erfindung betrifft ferner Verfahren zur Herstellung der erfindungsgemäßen Cyclodextrinderivate. Die Herstellung erfolgt vorzugsweise mittels eines Verfahrens, welches dadurch gekennzeichnet ist, daß natives α-, β- und/oder γ-Cyclodextrin und/oder ein geeignetes α-, β- und/oder γ-Cyclodextrinderivat in einem geeigneten Reaktionsmedium in Gegenwart eines Säureakzeptors und gegebenenfalls eines oberflächenaktiven Mittels in schwach saurem bis stark basischen Milieu bei Temperaturen von -10 bis +70°C mit geeigneten stickstoffhaltigen Heterocyclen umgesetzt und ggf. anschließend im neutralen oder schwach basischem Bereich ggf. unter Zuhilfenahme eines Puffers in ansonsten bekannter Art und Weise aufgearbeitet wird.

Anschließend kann das erhaltene Cyclodextrinderivat ggf. mittels für Cyclodextrinderivate üblicher Reinigungsverfahren weiter aufgereinigt werden.

Mit dem erfindungsgemäßen Verfahren lassen sich Cyclodextrin -Derivate mit stabilen C-O, C-S oder C-N-Bindungen erhalten, wobei keine giftigen Verbindungen auftreten wie bei den bekannten Verfahren durch Umsetzung von Cyclodextrin mit Epichlorhydrin. So fallen z.B. bei der Umsetzung von Cyclodextrin mit Cyanurchlorid nur Kochsalz und toxikologisch wesentlich unbedenklichere Nebenprodukte an.

Für das erfindungsgemäße Verfahren sind beliebige Cyclodextrine bzw. Cyclodextrinderivate, welche mindestens eine freie OH Gruppe/Cyclodextrin Molekül in mindestens einer der Positionen C2, C3, und/oder C6 der Anhydroglucose besitzen geeignet. Cyclodextrin oder Cyclodextrinderivat müssen keinen besonderen Ansprüchen in Bezug auf Reinheit genügen. Sie sind in handelsüblicher Qualität mit einem Wassergehalt von 0 bis 16% einsetzbar.

Beispiele für Cyclodextrinderivate, die für das erfindungsgemäße Herstellungsverfahren geeignet sind, sind Cyclodextrinether bzw. Mischether, Cyclodextrinester bzw. Mischester oder gemischte Cyclodextrinether/esterderivate, insbesondere die genannten Derivate des β-Cyclodextrin.

Insbesondere geeignet sind hydrophile Cyclodextrin-Derivate mit folgenden Substituenten: ($C_1$-$C_4$)-Alkylrest, bevorzugt Methyl- oder Ethylrest, besonders bevorzugt Methylrest; ($C_2$-$C_6$)-Hydroxyalkylrest, bevorzugt Hydroxypropylrest oder Hydroxybutylrest, besonders bevorzugt Hydroxypropylrest, ($C_3$-$C_6$)-Oligohydroxyalkylrest, bevorzugt $C_3$-$C_4$, besonders bevorzugt Dihydroxypropylrest, Acetylrest, Propionylrest, Butyrylrest, bevorzugt Acetylrest, Propionylrest, besonders bevorzugt Acetylrest.

Vorzugsweise geeignet sind Derivate mit einem durchschnittlichen Substitutionsgrad pro Anhydroglucose (DS) von 0,3 - 2,0 besonders bevorzugt von 0,6 - 1,8.

Bevorzugt geeignet sind ferner ionische Cyclodextrin-Derivate mit folgenden Substituenten: Carboxyalkylrest in Form der freien Säure oder als Alkalisalz, Sulfonsäurealkylrest in Form der freien Säure oder als Alkalisalz, Carboxyhydroxyalkylrest in Form der freien Säure oder als Alkalisalz, Sulfonsäurehydroxyalkylrest in Form der freien Säure oder als Alkalisalz, ($C_1$-$C_4$)-Alkylrest, ($C_2$-$C_4$)-Hydroxyalkylrest und Sulfatrest.

Vorzugsweise beträgt bei diesen Cyclodextrin-Derivaten der durchschnittliche Substitutionsgrad pro Anhydroglucose (DS) 0,3 - 2,0, besonders bevorzugt 0,4 - 1,5, insbesondere 0,4-0,6.

Bevorzugt geeignet sind ferner ionische Cyclodextrin-Derivate mit Oxalylrest, Malonylrest, Succinylrest, Glutarylrest und/oder Adipinylrest als Substituenten, vorzugsweise mit einem durchschnittlichen Substitutionsgrad pro Anhydroglucose (DS) von 0,3 bis 2,0, besonders bevorzugt 0,4 - 1,5, insbesondere 0,4-0,8.

Die Herstellung der geeigneten Cyclodextrinderivate ist literaturbekannt.

Für den Einsatz im erfindungsgemäßen Verfahren sind stickstoffhaltige Heterozyklen mit mindestens zwei elektrophilen Zentren geeignet.

Beispiele für solche Heterozyklen sind 2,4,5,6-Tetrachlorpyrimidin, 2,4,6-Trifluor-5-chlorpyrimidin (herstellbar aus 2,4,5,6-Tetrachlorpyrimidin durch Halogenaustausch); 2,4-Dichlorpyrimidin-5-carbonsäurechlorid (herstellbar nach literaturbekannten Methoden); 2,3-Dichlorchinoxalin-6-carbonsäurechlorid (Herstellung nach K.G.Kleb, E.Siegel, K. Sasse, Angew. Chem. 76, 423 (1964); Angew. Chem. Int. Ed. Engl. 3, 408 (1964) sowie die im folgenden dargestellten Verbindungen der Formeln II

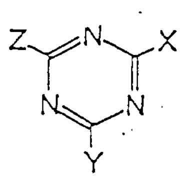

II

wobei X und Y gleich oder verschieden sein können und Halogen, bevorzugt F oder Cl bedeuten und Z Halogen bevorzugt F oder Cl, OH, OLi, ONa, OK, $OR^7$, $SR^7$, oder $NR^{10}R^{11}$ bedeutet, wobei die Reste $R^7$ bis $R^{11}$ die bereits genannten Bedeutung haben.

Beispiele für Verbindungen der Formel II sind 2,4,6-Trichlor-1,3,5-triazin; 2,4,6-Trifluor-1,3,5-triazin; 2-Amino-4,6-dichlor-1,3,5-triazin; 2,4-Dichlor-6-methoxy-1,3,5-triazin; 2,4-Dichlor-6-hydroxy-1,3,5-triazin, bzw. das Natrium-Salz dieser Verbindung, 2,4-Dichlor-6-ethylamino-1,3,5-triazin, 2,4-Dichlor-6-diethylamino-1,3,5-triazin.

Die genannten Verbindungen sind käuflich erhältlich oder nach bekannten oder analogen Verfahren aus dem 2,4,6-Trichlor-1,3,5-triazin durch Umsetzung mit den entsprechenden Nukleophilen erhältlich.

Vorzugsweise werden 2,4,6-Trichlor-1,3,5-triazin: 2,4,6-Trifluor-1,3,5-triazin; 2-Amino-4,6-dichlor-1,3,5-triazin; 2,4-Dichlor-6-methoxy-1,3,5-triazin; 2,4-Dichlor-6-hydroxy1,3,5-triazin, Natrium-Salz; 2,4,5,6-Tetrachlorpyrimidin; 2,4,6-Trifluor-5-chlorpyrimidin; 2,4-Dichlorpyrimidin-5-carbonsäurechlorid oder 2,3-Dichlorchinoxalin-6-carbonsäurechlorid 2,4-Dichlor-6-ethylamino-1,3,5-triazin, 2,4-Dichlor-6-diethylamino-1,3,5-triazin eingesetzt.

Als Reaktionsmedium sind für das erfindungsgemäße Verfahren vorzugsweise DMF (Dimethylformamid), DMSO (Dimethylsulfoxid), Xylol, Dioxan, Aceton, Methanol, Ethanol, Wasser, Toluol, Methylethylketon oder Gemische dieser Substanzen geeignet.

Bei der Umsetzung mit 2,4,6-Trihalo-1,3,5-triazinen, vorzugsweise Cyanurchlorid, sollte der Heterocyclus in feindisperser Form vorliegen, in Form von Gemischen mit organischen Lösungsmitteln oder in Wasser ggf. unter Zugabe eines oberflächenaktiven Mittels als Benetzungsmittel.

Besonders bevorzugt wird Wasser bzw. ein Wasser/Aceton-Gemisch im Mischungsverhältnis 10:1 bis 2:1 verwendet.

Als Säureakzeptor sind im erfindungsgemäßen Verfahren vorzugsweise eine oder mehrere Substanzen ausgewählt aus der Gruppe der Alkali- bzw. Erdalkalihydroxide, Alkali- bzw. Erdalkalicarbonate, Alkali- bzw. Erdalkalihydrogencarbonate, Alkalihydrogenphoshate, Amine, tert. Amine, Pyridin geeignet.

Besonders bevorzugt wird NaOH, KOH, Natriumcarbonat, Kaliumcarbonat, Natriumhydrogencarbonat, Kaliumhydrogencarbonat, Dinatriumhydrogenphosphat, Dikaliumhydrogenphosphat, Pyridin, Triethylamin oder Collidin eingesetzt.

Als oberflächenaktives Mittel sind im erfindungsgemäßen Verfahren die bei Umsetzungen mit Cyanurchlorid üblichen Mittel geeignet. Solche Mittel sind beispielsweise Alkylsulfate und -ethersulfate als Natrium-, Ammonium-, Lithium- und Triethanolammonium-Salze (erhältlich beispielsweise bei der Fa. Henkel, Düsseldorf unter der Bezeichnung Texapon), oder Nonylphenol-polyglykolether oder Mischungen von anionaktiven und nichtionogenen Tensiden (erhältlich beispielsweise bei der Fa. Atlas Chemie, Essen unter der Bezeichnung Renex und Atlox) oder Alkylsulfonate.

Besonders geeignet sind Texapon K12, Renex 697 und Atlox 4853B, Natriumdodecylsulfat, Natriumoctylsulfat, 1-Dodecansulfonsäure-Natriumsalz, 1-Octansulfonsäure-Natriumsalz (letztere erhältlich beispielsweise bei der Fa. Fluka Feinchemikalien GmbH, Neu-Ulm).

Als Puffer werden im erfindungsgemäßen Verfahren für den pH Bereich von 6 bis 10, vorzugsweise 7 bis 9, allgemein übliche Puffer eingesetzt. Solche Puffer sind beispielsweise Phosphatpuffer (z.B. $Na_2HPO_4$ / $KH_2PO_4$), Carbonatpuffer (z.B. Na-Carbonat / Na-bicarbonat), Acetatpuffer (z.B. Essigsäure/ Na-Acetat), Citratpuffer (z.B. Citronensäure / Na-Citrat) oder Tris-Puffer (z.B. Trishydroxymethylaminomethan / HCl).

Vorzugsweise werden pro Mol Anhydroglucose des Cyclodextrins 0,1-4 mol, bevorzugt 0,2-2 mol, besonders bevorzugt 0,3-1,2 mol, stickstoffhaltiger Heterozyclus eingesetzt. Die eingesetzten Molverhältnisse werden dabei je nach angestrebtem Substitutionsgrad und Wassergehalt des verwendeten Cyclodextrins gewählt.

Vorzugsweise werden pro Mol stickstoffhaltiger Heterozyclus 0,5-3 mol, Säureakzeptor eingesetzt.

Für die Darstellung von Monohalotriazinyl-Cyclodextrin-Derivaten aus 2,4,6-Trihalo-1,3,5-Triazinen werden 1,5-4 mol, vorzugsweise 1,75-3,5 mol, besonders bevorzugt 1,8-3,2 mol, Säureakzeptor pro mol stickstoffhaltiger Heterozyklus eingesetzt.

Für die Darstellung von Monohalotriazinyl-Cyclodextrin-Derivaten aus Dihalo-1,3,5-Triazinen werden 0,5-2 mol, vorzugsweise 0,75-1,5 mol, besonders bevorzugt 0,8-1,3 mol, Säureakzeptor pro mol stickstoffhaltiger Heterocyclus eingesetzt.

Für die Darstellung von Trihalopyrimidyl-Cyclodextrin-Derivaten werden 0,5-1,5 mol, vorzugsweise 0,75-1,25 mol, besonders bevorzugt 0,8-1,2 mol, Säureakzeptor pro mol stickstoffhaltiger Heterozyklus eingesetzt.

Für die Darstellung von Dichlor-Chinoxalinoyl- bzw. Dichlorpyrimidinoyl-Cyclodextrin-Derivaten werden 0,5-2 mol, vorzugsweise 0,75-1,5 mol, besonders bevorzugt 0,8-1,3 mol, Säureakzeptor pro mol stickstoffhaltiger Heterocyclus eingesetzt.

Vorzugsweise werden Cyclodextrin bzw. Cyclodextrinderivat und Reaktionsmedium in einem Mengenverhältnis Cyclodextrin/Reaktionsmedium von 1:30 bis 1:1,5, vorzugsweise etwa 1:14 bis 1:2, besonders bevorzugt 1:12 bis 1:3, eingesetzt.

Zur Herstellung der erfindungsgemäßen Cyclodextrinderivate werden Cyclodextrin bzw. Cyclodextrinderivat, stickstoffhaltiger Heterozyklus, Säureakzeptor, Reaktionsmedium und ggf. oberflächenaktives Mittel, in den angegebenen Verhältnissen entweder gleichzeitig oder nacheinander zusammengegeben und gut gerührt.

Im erfindungsgemäßen Verfahren ist es wichtig, daß das Reaktionsmedium nicht zu sauer wird.

Das erfindungsgemäße Verfahren sollte bei der Umsetzung von Cyclodextrin bzw Cyclodextrinderivat mit Trihalotriazin zur Darstellung von Monohalotriazinyl-Cyclodextrinen bei -10°C bis 35°C, bevorzugt -5°C bis 25°C, besonders bevorzugt -5°C bis 15°C, durchgeführt werden.

Die Umsetzung von Cyclodextrin bzw. Cyclodextrinderivat mit Trihalotriazin zur Darstellung von Dihalotriazinyl-Cyclodextrinen, sollte bei -10°C bis 25°C, bevorzugt -5°C bis 10°C, besonders bevorzugt -5°C bis 5°C, erfolgen.

Die Umsetzung von Cyclodextrin bzw. Cyclodextrinderivat mit Tetrahalopyrimidin, sollte bei 10°C bis 45°C, bevorzugt 15°C bis 35°C, besonders bevorzugt 20°C bis 35°C, erfolgen.

Die Umsetzung von Cyclodextrin bzw. Cyclodextrinderivat mit heterocyclischen Säurechloriden erfolgt bei Temperaturen von 20 bis 90°C, besonders bei 30 bis 80°C, insbesondere bei 40 bis 70°C.

Das erfindungsgemäße Verfahren wird vorteilhafterweise bei Normaldruck durchgeführt.

Die Reaktionszeiten liegen in der Regel zwischen 0,5 und 6 h, häufig zwischen 2-4 h.

Mittels des erfindungsgemäßen Verfahrens erhält man vorzugsweise Mischungen von Cyclodextrinderivaten mit einem durchschnittlichen Substitutionsgrad (DS) für $R^1$ von 0 bis 2,0 je nach dem als Ausgangsprodukt eingesetzten Cyclodextrin/Cyclodextrinderivat und einem (DS) für $R^2$ von 0,1 bis 3,0.

Die Bestimmung des durchschnittlichen Substitutionsgrades pro Anhydroglukose (DS-Wertes) für stickstoffhaltige Substituenten kann nach literaturbekannten Methoden über Elementaranalyse, wie beispielsweise in US 5,134,127 und US 3,453,257 für schwefel- bzw. stickstoffhaltige Substituenten beschrieben, erfolgen.

Eine Bestimmung der reaktiven Zentren pro Anhydroglucose kann durch Umsetzung der erfindungsgemäßen Derivate mit Nukleophilen erfolgen, wie dies in den Beispielen mit Chlor als Abgangsgruppe als $DS_{Cl}$ beschrieben wird.

Eine weitere Aufarbeitung der erfindungsgemäßen Derivate kann, falls gewünscht, mit für die Cyclodextrin Reinigung allgemein bekannten Methoden erfolgen. Solche Methoden sind beispielsweise: Fällung mittels Alkohol- / Wasser-Gemischen, direkte Kristallisation, Adsorptionschromatographie oder Gelpermeationschromatographie und Dialyse.

Wurden die erfindungsgemäßen Monochlortriazinyl-Cyclodextrinderivate in Wasser gelöst, so beobachtete man eine langsame Hydrolyse unter Abspaltung von HCl. Die entstehende Säure wirkte autokatalytisch. In Pufferlösungen mit einem pH von 7 bis 9, vorzugsweise etwa 8 konnte die Hydrolyse der erfindungsgemäßen Triazinyl-Cyclodextrinderivate unterbunden werden. In solchen wässrigen Lösungen sind die erfindungsgemäßen Cyclodextrinderivate über mindestens 6 Wochen lagerstabil.

Die Erfindung betrifft daher ebenfalls Lösungen mit einem pH von 7 bis 9 enthaltend erfindungsgemäße Cyclodextrinderivate.

Die erfindungsgemäßen Cyclodextrinderivate sind in der Lage mit beliebigen Verbindungen, die eine oder mehrere nukleophile Gruppen wie beispielsweise OH, NH oder SH-Gruppen tragen unter Bildung kovalenter Bindungen zu reagieren. Die Erfindung betrifft daher ebenso Zusammensetzungen, die die erfindungsgemäßen Cyclodextrinderivate in gebundener Form enthalten. Je nach Art der Verbindung bzw. je nach Anzahl der nukleophilen Gruppen in der Verbindung ist mit den erfindungsgemäßen Cyclodextrinderivaten die Darstellung von neuen Cyclodextrinderivaten, Cyclodextrinoligomeren, oder Cyclodextrinpolymeren ebenso möglich wie die Anbindung von Cyclodextrinen, oder Cyclodextrinderivaten an Polymere oder eine Oberflächenmodifizierung.

Die Herstellung von etherhaltigen neuen Cyclodextrinderivaten kann beispielsweise durch Umsetzung der erfindungsgemäßen Cyclodextrinderivate mit $C_1$ bis $C_6$-Alkoholen z.B. Methanol, Ethanol, 2-Methoxyethanol oder Isopropanol unter leicht alkalischen Bedingungen bei 40 bis 100°C erfolgen.

Durch Umsetzung der erfindungsgemäßen Cyclodextrinderivate mit Thiolen wie z.B. Ethanthiol oder Propanthiol lassen sich Thioether-haltige Cyclodextrinderivate herstellen.

Durch Umsetzung der erfindungsgemäßen Cyclodextrinderivate mit primären oder sekundären Aminen beispielsweise Alkylaminen wie Methyl- oder Dimethylamin, Ethyl- oder Diethylamin, Anilin oder Anilinderivaten, oder Hydroxyalkylaminen wie Morpholin oder Morpholinderivaten lassen sich basische Cyclodextrinderivate darstellen.

Durch Umsetzung mit tertiären Aminen wie beispielsweise Trimethylamin, Triethylamin, Pyridin oder Pyridinderivaten wie beispielsweise Nicotinsäure oder Nicotinsäurederivate, oder Diazabicyclooctan lassen sich positiv geladene Cyclodextrindrivate, welche selbst wieder reaktive Cyclodextrin-derivate sind, darstellen.

Cyclodextrinoligomere bzw. Cyclodextrinpolymere lassen sich unter Verwendung der erfindungsgemäßen Cyclodextrinderivate beispielsweise wie folgt herstellen:

Durch Umsetzung der erfindungsgemäßen Cyclodextrinderivate mit Verbindungen, die zwei oder mehr nukleophile Gruppen tragen, kommt es zur Vernetzung der Cyclodextrinderivate oder zur Bildung von Nukleophilen, die die nukleophile Gruppe an einem Spacer tragen. Als Beispiele für Verbindungen, die zwei oder mehr nukleophile Gruppen tragen seien genannt Di- bzw. Oligoalkohole wie 1,3-Diaminopropan, 1,4-Diaminobutan, 1,3-Propandiol, 1,4-Butandiol, Aminobutanol, Di- bzw. Oligoamine, Di- bzw. Oligothiole oder gemischte Nukleophile wie Aminoalkohole, etc. oder auch Cyclodextrine/Derivate oder die erfindungsgemäßen Cyclodextrinderivate selbst.

Werden die Umsetzungen in hoher Verdünnung durchgeführt, so werden auch nicht vernetzte Cyclodextrinderivate erhalten, die eine nukleophile Gruppe z.B. OH, NH oder SH an einem Spacer enthalten, selbst also wieder Nukleophile sind.

Durch Umsetzung der erfindungsgemäßen Cyclodextrinderivate mit löslichen Polymeren oder Biopolymeren wie beispielsweise $\alpha,\beta,\gamma$-Cyclodextrin, $\alpha,\beta,\gamma$-Cyclodextrinderivaten, Stärke oder Stärkederivaten, Polyvinylalkohol (PVA) oder PVA-Derivaten, Polyallylaminen, oligomeren Zuckern oder Zuckerderivaten lassen sich modifizierte Polymere, die in der Lage sind, in Wasser schwer lösliche Stoffe zu solubilisieren, herstellen.

Die so erhaltenen Substanzen lassen sich beispielsweise als selektive Trennmittel in der Chromatographie einsetzen.

Durch Umsetzung der erfindungsgemäßen Cyclodextrinderivate mit unlöslichen Polymeren oder Biopolymeren, die nukleophile Gruppen tragen, wie beispielsweise Cellulose oder Cellulosederivaten, polymere Zucker oder Zuckerderivaten, Chitin, Gelatine, Polyvinylalkoholen oder deren Derivaten, oder Polyallylaminen lassen sich modifizierte Polymere, die in der Lage sind in Wasser schwer lösliche Stoffe zu solubilisieren, darstellen.

Die so erhaltenen Substanzen lassen sich beispielsweise als selektive Trennmittel in der Chromatographie einsetzen.

Die vorliegende Erfindung betrifft ferner Polymere, an die kovalent 0,1 bis 100 Gew.% mindestens eines erfindungsgemäßen Cyclodextrinderivats mit mindestens einem stickstoffhaltigen Heterozyklus gebunden ist.

Vorzugsweise sind 0,3 bis 25 Gew.% des genannten Cyclodextrinderivates an das Polymer gebunden.

Die Anknüpfung erfolgt vorzugsweise in den Außenbereichen des Polymeren.

Die kovalent mit CD ausgerüsteten Polymere haben verschie-denste vorteilhafte Eigenschaften.

Die CD's können selbst Effekte auf die Eigenschaften des Polymers ausüben, die CD's bewirken beispielsweise:

- die Verbesserung der Haftung auf Oberflächen
- die Solubilisierung des Polymeren/Oligomeren in der entsprechenden Matrix
- die Hydrophilisierung bzw. Hydrophobisierung des Polymeren
- die Verbesserung der Benetzbarkeit, Erhöhung der Verträglichkeit mit dem umgebenden Medium
- Erhöhung der Stabilität gegen Koagulation, mit CD ausgerüstete Polymere bilden stabilere Emulsionen
- Rheologieänderung
- die Verbesserung der Filmbildung
- bei Copolymerisation von Styrol/Butylacrylat mit wasserlöslichen Hilfsmonomeren werden häufig wasserlösliche Oligomere gebildet. Durch das mit CD ausgerüstete Polymer werden diese Oligomere gebunden. Aufgrund der

nun niedrigeren Viskosität kann der Feststoffgehalt der Dispersion angehoben werden. Durch das Binden dieser Oligomere wird ferner deren weichmachende Wirkung beseitigt, die Mindestfilmbildungstemperatur wird dadurch angehoben

- die mit CD ausgerüsteten Polymere sind deutlich weniger wasseranfällig

Die CD-Kavität kann in vielfältiger Weise genutzt werden, dabei wurden z.T. verschiedene neue Effekte beobachtet:

- es können Wirkstoffe in das CD eingeschlossen und kontrolliert freigesetzt werden. Das CD wirkt dann wie ein Haftvermittler. Beispiele für Wirkstoffe sind: Biozide, Insektizide, Fungizide, Herbizide, Pheromone, Duftstoffe, Geschmacksstoffe, pharmazeutische Wirkstoffe, Wirkstoffe zur Antistatikausrüstung oder Flammschutzausrüstung, Stabilisatoren (UV), Farbstoffe.

- Wirkstoffe können durch den Einschluß stabilisiert (gegen Licht, Temperatur, Oxidation, Hydrolyse, Verdampfung), solubilisiert und damit (bio-)verfügbar gemacht oder kontrolliert freigesetzt werden. Der Vorteil dabei ist, daß die Wirkstoffe unmittelbar am Polymer gebunden und kompatibilisiert sind. Es muß keine Fremdsubstanz zugemischt werden, die später ausbluten kann.

- ungewünschte Substanzen können absorbiert werden

- Substanzen können selektiv absorbiert werden. Die CD-ausgerüsteten Polymere sind somit auch als Trennmaterialien geeignet.

- bei mit CD ausgerüsteten Polymeren wird ein Ausblühen von nicht kovalent gebundenen Hilfsstoffen verhindert. Die Hilfsstoffe werden homogener eingearbeitet. Beispielsweise werden Vernetzer (z.B. $AlCl_3$, $Al(OH)_3$, $B(OH)_3$) homogener eingearbeitet. Die Einarbeitungszeiten können verkürzt werden.

- die so formulierten Wirkstoffe sind deutlich weniger toxisch als die freien Verbindungen. Beispielsweise sind Isothiazolone/Chloracetamid in Form der CD-Komplexe weniger hautreizend.

- die im Polymer enthaltenen Restmonomeren (Vinylacetat, insbesondere wasserunlösliche Monomere, welche schlecht einpolymerisieren, wie beispielsweise Vinyllaurat, Versaticsäurevinylester, Butylacrylat) werden komplexiert. Durch die Komplexierung wird deren Freisetzung verzögert, so daß beispielsweise eine Dispersion gefahrlos verarbeitet werden kann. Beispielsweise werden die MAK-Werte unterschritten.

- geruchsbelästigende Substanzen, wie z.B. Abbauprodukte, Nebenprodukte von Polymeren, wie z.B. Amine, Essigsäure, etc. werden komplexiert.

Beispiele für erfindungsgemäß geeignete Polymere sind Polymere mit mindestens einer nukleophilen Gruppe.
Beispiele für synthetische Polymere sind Polyester, Polyamide, Polyamine, Phenoplaste, Aminoplaste, Polyurethane, Polyacrylsäuren, Polyacrylamide, Polyallylalkohole, Polyallylamine, Polyvinylacetat-Polymere, Polyvinylalkohole, Polyepoxide, Silicone, Polypropylen, Polyethylen.
Diese müssen mindestens eine nukleophile Gruppe tragen. Beispiele für nucleophile Gruppen sind: -OH, -NH oder SH-Gruppen.
Die Polymere können hergestellt werden durch Polykondensation, Polyaddition, radikalische Polymerisation unter Zuhilfenahme unterschiedlicher Polymerisationstechniken:
Beispiele für die Reaktion in homogener Phase sind die Lösungsmittelpolymerisation oder die Polymerisation in Substanz.
Beispiele für die Reaktion in heterogener Phase sind die Fällungspolymerisation, die Suspensionspolymerisation, die Emulsionspolymerisation und die Grenzflächenpolykondensation.
Erfindungsgemäß geeignet sind ferner natürliche Polymere mit mindestens einer nukleophilen Gruppe, wie beispielsweise: Polysaccharide, z.B. Stärke, Glycogene, Mannane, Pektine, Chitine und Derivate oder Proteine, z.B. Eiweiße, Kollagen, Elastin, Globuline, Fibrinogene, Wolle, Seide, Polyglutamat, Gelatine oder Polyisoprene oder Polynukleotide oder Lignin oder ligninhaltige Substanzen.
Die Erfindung betrifft ferner Verfahren zur Herstellung der erfindungsgemäßen Polymeren.
Folgende Verfahren zur Herstellung von erfindungsgemäßen Polymeren mit CD lassen sich unterscheiden:

A) Die Ausrüstung eines fertigen Polymeren. Das Polymere sollte im Reaktionsmedium nach Möglichkeit löslich,

gut gequollen oder gut benetzt vorliegen.

Bei der Ausrüstung von fertigen Polymeren können vorzugsweise folgende Verfahren unterschieden werden

A1) Flotte-Verfahren. Die Ausrüstung des Polymeren erfolgt in der Flotte:
Das Polymer wird im Lösungsmittel suspendiert gequollen oder gelöst und mit dem reaktionsfähigen (elektrophilen) CD in Gegenwart eines Säureakzeptors umgesetzt.

A2) Tauchverfahren: Das Imprägnieren des Polymeren erolgt in der Flotte, die Fixierung außerhalb der Flotte. Dies Verfahren geht nur bei im Reaktionsmedium unlöslichen Polymeren:
Das Polymer wird in die Flotte (bestehend aus Lösungsmittel, reaktionsfähigem CD und Säureakzeptor) bei RT oder bei erhöhter Temperatur eingetaucht, gut imprägniert anschließend aus der Flotte entfernt und bei erhöhter Temperatur fixiert und getrocknet.

B) die Ausrüstung von Polymeren erfolgt während der Polymerisation. Die Polymerisation kann durchgeführt werden:

in homogener Phase
(Lösungspolymerisation oder Polymerisation in Substanz)
in heterogener Phase
(Fällungspolymerisation, Suspensionspolymerisation, Emulsionspolymerisation oder Grenzflächenpolykondensation)

Die Polymerisation wird in diesem Fall in Gleichgewicht des reaktionsfähigen CD's und eines Säureakzeptors durchgeführt.

Als Cyclodextrinderivate mit stickstoffhaltigem Heterozyklus zur Ausrüstung des Polymeren werden die erfindungsgemäßen Cyclodextrinderivate eingesetzt.

Besonders bevorzugt werden folgende Cyclodextrinderivate zur Ausrüstung der textilen Materialien bzw. des Leders eingesetzt: 2,4-Dichlor-1,3,5-triazinyl-Cyclodextrine, 2-Chlor-4-hydroxy-1,3,5-triazinyl-Cyclodextrine (Natrium-Salze), 2-Fluor-4-hydroxy-1,3,5-triazinyl-Cyclodextrine (Natrium-Salze), 2,4,5-Trichlorpyrimidyl-Cyclodextrine, 5-Chlor-2,4-difluorpyrimidyl-Cyclodextrine, 6-(2,3-Dichlor)-chinoxalinoyl-Cyclodextrine, 5-(2,4-Dichlor)-pyrimidinoyl-Cyclodextrine, 2-Amino-4-chlor-1,3,5-triazinyl-Cyclodextrine, 2-Chlor-4-ethylamino-1,3,5-triazinyl-Cyclodextrine, 2-Chlor-4-diethylamino-1,3,5-triazinyl-Cyclodextrine, 2-Chlor-4-methoxy-1,3,5-triazinyl-Cyclodextrine.

Insbesondere bevorzugt wird 2-Chlor-4-Hydroxy-1,3,5-triazinyl-β-Cyclodextrin (MCT-β-CD) eingesetzt.

Vorzugsweise werden Cyclodextrinderivate mit einem DS (durchschnittlichen Substitutionsgrad pro Anhydroglucose) bis DS 3,0, besonders bevorzugt DS 0,1 bis 2,0, insbesondere bevorzugt DS 0,3 bis 1,0 zur Umsetzung mit den Polymeren eingesetzt.

Neben den erfindungsgemäßen Cyclodextrin-Derivate und den bereits genannten Polymeren werden folgenden Edukte im erfindungsgemäßen Verfahren eingesetzt.

Säureakzeptoren:

ein oder mehrere Substanzen ausgewählt aus der Gruppe der Alkali- bzw. Erdalkalihydroxyde, Alkali- bzw. Erdalkalihydrogencarbonate, Alkalihydrogenphosphate, Amine, tert. Amine, Pyridin oder Gemische dieser Substanzen.

Bevorzugt geeignet sind: NaOH, KOH, Natriumcarbonat, Kaliumcarbonat, Natriumhydrogencarbonat, Kaliumhydrogencarbonat, Dinatriumhydrogenphosphat, Dikaliumhydrogenphosphat, Natriumacetat, Kaliumacetat, Pyridin, Triethylamin oder Collidin, besonders bevorzugt geeignet sind NaOH und Natriumcarbonat.

Lösungsmittel:

Toluol, Xylol, Acetonitril, Aceton, THF, Methanol, Ethanol, Propanol, Butanol, Dioxan, Formamid, Methylformamid, Dimethylformamid, N-Methylpyrrolidon, DMPU (1,3-Dimethyl-3,4,5,6-tetrahydro-2(1H)-pyrimidon), Acetamid, Methylacetamid, Dimethylacetamid, DMSO oder Gemische dieser Substanzen.

Besonders bevorzugt sind Wasser und Alkohole bzw. Gemische geeignet. Insbesondere bevorzugt ist Wasser geeignet. Es ist jedoch ebenso möglich in Substanz zu arbeiten.

Zusätze:

Harnstoff, Alginat
Salze
Alkalichloride, Alkalisulfate, Ammoniumsulfat, vorzugsweise Natriumchlorid, Natriumsulfat, Ammoniumsulfat.

Die genannten Komponenten werden vorzugsweise in folgenden Mengenverhältnissen eingesetzt:
CD-Konzentration in der Flotte (Gewichtsprozent) 0,5-70%, bevorzugt 3-50%, besonders bevorzugt 5-30%.
Salzkonzentration in der Flotte (Gewichtsprozent) 0-30%, bevorzugt 0 bis 20%, besonders bevorzugt etwa 10%.
Zusatzkonzentration 0-30%, besonders bevorzugt 0-20%.
Basenkonzentration in der Flotte (Gewichtsprozent) 0,2-30%, besonders bevorzugt 0,5-10%.
Alkaliverstärkung in der Flotte beim Einsatz von Carbonaten als Base (NaOH%) 0,1 bis 3%, bevorzugt 0,3 bis 1%.

Molverhältnisse:

"aktives Chlor" / Säureakzeptor = 2 : 1 bis 1 : 10, vorzugsweise 1 : 1 bis 1 : 3 aktives (elektrophil reagierendes) Chlor wird durch Umsetzung mit Diethylamin bestimmt, wie beschrieben in Beispiel 10.
Die Umsetzung erfolgt bei einer Temperatur von 0°C bis 170°C, vorzugsweise zwischen 20°C und 100°C, besonders bevorzugt zwischen 40 und 98°C. Die Temperatur ist in Abhängigkeit von der Reaktionsfähigkeit der Reaktionspartner zu wählen.
Die Umsetzung erfolgt vorzugsweise bei Normaldruck bis leichtem Überdruck (z.B. Eigendruck bei Verwendung geschlossener Apparaturen).
Die Reaktionszeiten liegen in der Regel zwischen 5 min und 6 h, häufig zwischen 0,5 - 4 h.
Die erfindungsgemäßen Polymere können

a) in homogener Form z.B. als polymerer Werkstoff oder Harz
b) in heterogener Form z.B. als Suspension oder Emulsion anfallen.

Erfindungsgemäße wässrige Polymerdispersionen können durch Sprühtrocknung verdüst werden und in Pulverform eingesetzt werden.
Die erfindungsgemäßen Polymere eignen sich für alle Anwendungen, die für Polymere bekannt sind. Sie eignen sich beispielsweise als polymerer Werkstoff. Die erfindungsgemäßen Polymere eignen sich zudem für alle Anwendungen, die für Cyclodextrine bekannt sind.
Erfindungsgemäße wässrige Polymerdispersionen eignen sich insbesondere als Beschichtungsmittel und Klebemittel, beispielsweise für Papier, Textilien, Glasfasern, Holz und Karton.
Insbesondere geeignet sind wäßrige Polymerdispersionen mit einem Festgehalt von 30 bis 75%, welche mit Cyclodextrinderivaten der allgemeinen Formel (I) modifiziert sind, enthaltend Homo- oder Copolymerisate ethylenisch ungesättigter Monomere.
Solche wässrigen Polymerdispersionen sind erhältlich durch Emulsionspolymerisation eines oder mehrerer ethylenisch ungesättigter Monomere enthaltend reaktive Gruppen und ggf. einen Emulgator mittels Radikalinitiatoren in wäßrigem Medium, in Gegenwart von Cyclodextrinderivaten der allgemeinen Formel I.
Typische Anwendungen der wäßrigen Polymerdispersionen oder Dispersionspulver in diesen Bereichen sind die Verwendung

- als Bindemittel in der Papierherstellung,
- als Bindemittel zur Herstellung von Wirkstoffe enthaltenden, bevorzugt durch Direktverpressung hergestellten Preßkörpern
- als Klebstoffe für Holz, Papier, Textilien,
- als Bindemittel für Beschichtungen, Putze und Anstriche, insbesondere Anstrichfarben,
- in der Bauindustrie, insbesondere als Zusätze zu hydraulischen Bindemitteln wie Zement und Gips,
- insbesondere in Beton, Bauklebern, Mörteln, Spachtelmassen und Verlaufmassen.

Die erfindungsgemäßen Polymere, bzw. ein mit den erfindungsgemäßen Polymerdispersionen beschichtetes Papier, Textil, Glasfaser, Holz und Karton weist eine erhöhte Hydrophobie auf. Bei starker Ausrüstung weisen die

Materialien eine höhere Steifigkeit auf.

Papier, Textilien, Glasfaser, Holz und Karton können mit Wirkstoffen ausgerüstet werden, z.B. mit Duftstoffen, UV-Stabilisatoren, Bioziden, Bakteriziden, Insektiziden, Fungiziden, Pheromonen. Bei derart ausgerüsteten Gegenständen können unangenehme Gerüche (z.B. Schweiß, Essigsäure, Buttersäure, Amine, Schwefelverbindungen oder Restmonomere toxischer Substanzen) zurückgehalten werden. Dies kann vorteilhaft beispielsweise während der Verarbeitung/Applikation dieser Materialien sein.

Die erfindungsgemäßen CD-modifizierten Polymere lassen sich für alle Anwendungen, wie sie für Cyclodextrine bekannt. sind, verwenden.

Beispielsweise seien genannt:

- die Solubilisierung von in Wasser nicht- oder schwerlöslichen Substanzen, z.B. von Wirkstoffen, wie Bioziden, Pharmakas, Stabilisatoren
- die Erhöhung der Bioverfügbarkeit von Wirkstoffen
- die Stabilisierung von Substanzen gegen Licht, Temperatur, Oxidation, Hydrolyse oder von flüchtigen Substanzen
- die Maskierung von schlechtem Geschmack oder unangehnemem Geruch
- die kontrollierte Abgabe von Wirkstoffen wie Bioziden, Pharmaka
- die selektive Extraktion oder Komplexierung von Verbindungen (Trennungen)
- die Formulierung von Wirkstoffen, z.B. als pulverförmige Formulierung.

Durch Anbindung der erfindungsgemäßen Cyclodextrinderivate an nukleophile Gruppen tragende Oberflächen lassen sich diese Oberflächen modifizieren. Beispielsweise lassen sich die erfindungsgemäßen Cyclodextrinderivate mit Papier, Pigmenten, Gelatine oder Leder umsetzen. Die so erhaltenen Produkte lassen sich z.B. als Haftvermittler, zur Erhöhung der Hydrophilie oder zur Komplexierung in Wasser schwer löslicher Substanzen einsetzen.

Nach der Umsetzung mit Textilien wie Baumwolle, Wolle, natürlichen oder synthetischen Fasern etc. lassen sich auf der Oberfläche der so behandelten Textilien jeweils gewünschte Verbindungen komplexieren. So ist z.B. die Komplexierung von Bioziden, UV-Stabilisatoren oder Duftstoffen auf den Textilien möglich.

Die vorliegende Erfindung betrifft ferner textiles Material, insbesondere eine Faser, ein Filament, ein Garn, ein Haufwerk oder ein Flächengebilde, oder Leder, welches mit 0,1 bis 25 Gew.%, bezogen auf das Gewicht des unbehandelten Materials, mindestens eines erfindungsgemäßen Cyclodextrinderivats ausgerüstet ist.

Vorzugsweise ist das textile Material oder Leder mit 0,3 bis 10 Gew.% des genannten Cyclodextrinderivates ausgerüstet.

Die Ausrüstung erfolgt vorzugsweise in den Außenbereichen der Fasern bzw. des Materials.

Die Ausrüstung erfolgt über kovalente Bindung der erfindungsgemäßnen Cyclodextrinderivate. Dies bewirkt eine große Naßechtheit und Waschfestigkeit.

Die Ausrüstung der textilen Materialien bzw. des Leders mit erfindungsgemäßen Cyclodextrinderivaten mit mindestens einem stickstoffhaltigen Heterozyklus erfolgt analog den in der Textil/Leder-Branche üblichen Methoden für Reaktivfarbstoffe mit den entsprechenden Reaktivgruppen.

Beispiele für zur Ausrüstung geeignete textile Materialien sind:

Cellulose-Fasern, besonders Baumwolle, Regeneratcellulose (z.B. Viskose oder Kupferkunstseide), Fasermischungen mit Cellulose oder Wolle, besonders Schafwolle, sowie Polymerfasern wie Polyester, Polyamid oder Polyacrylnitril mit mindestens einer nukleophilen Gruppe wie OH, SH oder NH oder Fasermischungen mit diesen Polymerfasern.

Die Erfindung betrifft ferner Verfahren zur Herstellung der erfindungsgemäßen Materialien. Die Herstellung erfolgt vorzugsweise mittels eines Verfahrens, welches dadurch gekennzeichnet ist, daß erfindungsgemäße Cyclodextrinderivate, die im folgenden näher beschrieben werden, in einem geeigneten Reaktionsmedium (Flotte) unter Zugabe von Basen und ggf. von Salzen und Zusätzen zum Reaktionsmedium gelöst, im neutralen bis basischen Milieu auf die Materialien oder Leder aufgebracht, die Materialien oder das Leder ggf. getrocknet und anschließend bei Temperaturen von 20-220°C fixiert werden.

Das Aufbringen der Flotte auf die Materialien oder Leder kann im Batch-Verfahren (Ausziehverfahren) erfolgen bei dem die Fixierung durch Erhitzen der Flotte erfolgt oder im halbkontinuierlichen Verweilverfahren oder im kontinuierlichen Verfahren, bei denen die Fixierung außerhalb der Flotte am mit der Flotte getränkten, (imprägnierten), ggf. getrockneten Material erfolgt analog der für die Färbung von textilen Materialien oder Leder entwickelten Färbetechniken. Besonders effizient wird die Fixierung bei den letzen beiden Verfahren, wenn das textile Material vor der Fixierung durch Abquetschen weitgehend von der Flotte befreit oder sogar getrocknet wurde. Anschließend erfolgt ein gründliches Spülen der Materialien mit kaltem und/oder heißem Wasser und ggf. ein Waschen der Materialien mit einem wirksamen Waschmittel bei entsprechender Temperatur in ansonsten bekannter Art und Weise.

Als Cyclodextrinderivate mit stickstoffhaltigem Heterozyklus zur Ausrüstung des textilen Materials bzw. des Leders werden die erfindungsgemäßen Cyclodextrinderivate eingesetzt.

Besonders bevorzugt werden folgende Cyclodextrinderivate zur Ausrüstung der textilen Materialien bzw. des Leders eingesetzt: 2,4-Dichlor-1,3,5-triazinyl-Cyclodextrine, 2-Chlor-4-hydroxy-1,3,5-triazinyl-Cyclodextrine (Natrium-Salze), 2-Fluor-4-hydroxy-1,3,5-triazinyl-Cyclodextrine (NatriumSalze), 2,4,5-Trichlorpyrimidyl-Cyclodextrine, 5-Chlor-2,4-difluorpyrimidyl-Cyclodextrine, 6-(2,3-Dichlor)-chinoxalinoyl-Cyclodextrine, 5-(2,4-Dichlor)-pyrimidinoyl-Cyclodextrine, 2-Amino-4-chlor-1,3,5-triazinyl-Cyclodextrine, 2-Chlor-4-ethylamino-1,3,5-triazinyl-Cyclodextrine, 2-Chlor-4-diethylamino-1,3,5-triazinyl-Cyclodextrine, 2-Chlor-4-methoxy-1,3,5-triazinyl-Cyclodextrine.

Insbesondere bevorzugt wird 2-Chlor-4-Hydroxy-1,3,5-triazinyl-β-Cyclodextrin (HCT-β-CD) eingesetzt.

Vorzugsweise werden Cyclodextrinderivate mit einem DS (durchschnittlichen Substitutionsgrad pro Anhydroglucose) bis DS 3,0, besonders bevorzugt DS 0,2 bis 2,0, insbesondere bevorzugt DS 0,3 bis 1,0 zur Umsetzung mit dem textilen Material bzw. Leder eingesetzt.

Die erfindungsgemäßen Cyclodextrin-Derivate werden analog der reaktiven Farbstoffe auf die Faser oder Leder aufgezogen. Man benutzt dazu vorzugsweise die in der Färbung mit Reaktivfarbstoffen üblichen Färbemaschinen. Man unterscheidet je nach Reaktivität zwischen Kaltfixierern und Heißfixierern. Diese unterscheiden sich in der Reaktionsfähigkeit der reaktiven Gruppe.

Zu den Kaltfixierern zählen Cyclodextrin-Derivate mit Dichlortriazin-, Monofluortriazin-, Dichlorchinoxalin-, Difluorchlorpyrimidin- und Vinylsulfon-Gruppen, zu den Heißfixierern die Monochlortriazine und die Trichlorpyrimidine.

Das erfindungsgemäß besonders bevorzugte Cyclodextrin-Derivat 2-Chlor-4-hydroxy-1,3,5,-triazinyl-ß-Cyclodextrin, Natriumsalz (MCT-β-CD) gehört folglich zur Gruppe der Heißfixierer und ist somit etwas reaktionsträger.

Für die Ausrüstung von Leder sind besonders die Di- und Monochlortriazin-, Pyrimidin-Cyclodextrinderivate oder Cyclodextrin-Derivate mit Vinylsulfonsäuregruppen geeignet.

Eine geeignete Färbetechnik ist beispielsweise in Ullman's Encyclopedia of Industrial Chemistry 5. edition, Vol. A 22, page 662 beschrieben.

Für die Ausrüstung von textilen Materialien oder Leder mit den erfindungsgemäßen Cyclodextrin-Derivaten unterscheidet man 3 Fixierverfahren:

1. Ausziehverfahren oder Batch-Verfahren

Mit diesem Verfahren werden lose Materialien wie Garn oder Stückware behandelt (z.B. textile Gewebe: Garn, Wirk- und Maschenware, Florgeweben, Frottierwaren, Fasermischungen). Das Aufbringen der Cyclodextrin-Derivate erfolgt in der Flotte durch Erhitzen. Basen und ggf. Salze und Zusätze werden entweder zu Beginn des Prozesses der Flotte komplett zugesetzt oder während des Prozesses portionsweise nach bestimmter Zeit und bei bestimmter Temperatur zugegeben.

Reaktionsparameter für die Kaltfixierer

20-60°C, vorzugsweise 30-50°C
pH = 9-12, vorzugsweise pH = 10-11
Gesamtreaktionszeit 0,1-4 h, vorzugsweise 0,2 - 2 h.

Reaktionsparameter für die Heißfixierer wie z.B. MCT-β-CD 20-100°C, vorzugsweise 50-98°C

pH = 10-13, vorzugsweise pH = 11-12
Gesamtreaktionszeit bei einer Fixiertemperatur von 90-98°C, 0,1-4 h, vorzugsweise 0,2-1,5 h
Gesamtreaktionszeit bei einer Fixiertemperatur um 25°C, 5-40 h, vorzugsweise 7-25 h.

2. Halbkontinuierliches Verweilverfahren

Mit diesem Verfahren wird Stückware behandelt (z.B. Cellulose-Stückware). Das Material wird mit der Flotte imprägniert, die Fixierung erfolgt außerhalb der Flotte bei Raumtemperatur oder durch Erhitzen, nachdem das textile Material durch Abquetschen auf einen bestimmten Flottengehalt getrocknet wurde.

Reaktionsparameter für die Kaltfixierer

pH = 9-12, vorzugsweise pH = 10-11
Verweildauer bei 18-60°C, vorzugsweise 20-40°C außerhalb der Flotte 1-10 h, vorzugsweise 2-8 h.

Reaktionsparameter für die Heißfixierer wie z.B. MCT-β-CD 20-100°C, vorzugsweise 50-98°C

pH=10-13, vorzugsweise pH = 11-12
Gesamtreaktionszeit bei einer Fixiertemperatur von 90-98°C, 0,1- 4 h, vorzugsweise 0,2 - 1,5 h

Gesamtreaktionszeit bei einer Fixiertemperatur um 25°C, 5-40 h, vorzugsweise 7-25 h.

3. Kontinuierliches Verfahren

Bei diesem Verfahren wird Stückware (z.B. Cellulose-Stückware) in einem Arbeitsgang ausgerüstet und gewaschen. Das Material wird mit der Flotte (Cyclodextrin-Derivat, Base ggf. Salz und Zusätze) imprägniert und anschließend getrocknet. Durch anschließende Behandlung bei höherer Temperatur durch Behandlung mit Heißluft oder Sattdampf oder durch Kontakthitze wird fixiert. Spülen und Waschen des Material beendet den Ausrüst-Vorgang. Bevorzugt werden Heißfixierer wie MCT-β-CD.

Reaktionsparameter für die Kaltfixierer

pH = 9-12, vorzugsweise pH = 10-11
Verweildauer bei 18-60°C, vorzugsweise 20-40°C, 1-10 h, vorzugsweise 2-8 h.
Fixierung bei 90-160°C, vorzugsweise 100-140°C
Fixierdauer 5-180 s, vorzugsweise 10-100 s

Reaktionsparameter für die Heißfixierer wie z.B. MCT-β-CD pH = 10-13, vorzugsweise pH = 11-12

Fixierung bei 20-100°C, vorzugsweise 50-98°C, für 0,1-4 h, vorzugsweise 0,2-1,5 h. Die Fixierdauer bei einer Temperatur um 25°C beträgt 5-40 h, vorzugsweise 7-25 h.
Fixierung bei 100 - 230°C, vorzugsweise 140-220°C Fixierdauer 10-900 s, vorzugsweise 16-600 s

Im erfindungsgemäßen Verfahren werden als Lösungsmittel vorzugsweise Wasser oder enthärtetes Wasser eingesetzt.

Als Salze werden Alkalichloride, Alkalisulfate, Ammoniumsulfat, vorzugsweise Natriumchlorid, Natriumsulfat, Ammoniumsulfat eingesetzt.

Zusätze sind z.B. Harnstoff, Alginat.

Als Basen werden Alkalihydroxid, Alkalicarbonate, Alkalihydrogencarbonate, Alkalihydrogenphosphate und deren Gemische vorzugsweise: NaOH, KOH, Natriumcarbonat, Kaliumcarbonat, Natriumhydrogencarbonat, Kaliumhydrogencarbonat, Dinatriumhydrogenphosphat, Dikaliumhydrogenphosphat, Trinatriumphosphat, Trikaliumphosphat, Gemische aus NaOH und Natriumcarbonat bzw. aus KOH und Kaliumcarbonat, besonders bevorzugt: Natriumcarbonat, Gemische aus NaOH und Natriumcarbonat eingesetzt.

Die genannten Komponenten werden vorzugsweise in folgenden Mengenverhältnissen eingesetzt:

CD-Konzentration in der Flotte (Gewichtsprozent) 0,5-70%, bevorzugt 3-50%, besonders bevorzugt 5-30%.

Salzkonzentration in der Flotte (Gewichtsprozent) 0-30%, bevorzugt 0-20%, besonders bevorzugt 0-10%.

Zusatzkonzentration in der Flotte (Gewichtsprozent) 0-30%, besonders bevorzugt 0-20%.

Basenkonzentration in der Flotte (Gewichtsprozent) 0,2-20% besonders bevorzugt 0,5-10%.

Alkaliverstärkung in der Flotte beim Einsatz von Carbonaten als Base (Gewichtsprozent Natronlauge) 0,1-3%, besonders bevorzugt 0,3-1 %.

An die textilen Materialien oder Leder wird durch das beschriebene Verfahren Cyclodextrin kovalent vorzugsweise in den Außenbereichen gebunden. Damit sind die Hohlräume der Cyclodextrine verfügbar und folglich alle CD-typischen Anwendungen möglich.

Die Kavität des Cyclodextrins kann in vielfältiger Weise genutzt werden. Exemplarisch seien einige Anwendungen für die Ausrüstung textiler Materialien oder Leder genannt:

- es können Wirkstoffe in das Cyclodextrin eingeschlossen und kontrolliert wieder abgegeben werden.
  Das Cyclodextrin wirkt hier wie ein Haftvermittler. Beispiele für solche Wirkstoffe sind: Biozide, Bakterizide, Insektizide, Fungizide, antimikrobielle Verbindungen (z.B. für die Verwendung in der Hospitalhygiene, Schuhausrüstung etc.), Herbizide, Pheromone, Duftstoffe (z.B. zur Duftausrüstung von Textilien), Geschmacksstoffe, pharmazeutische Wirkstoffe (z.B. für die Ausrüstung von Pflastern, Verbänden, Geweben für medizinische Anwendungen etc.), Wirkstoffe zur Antistatikausrüstung oder Flammschutzausrüstung, Stabilisatoren (z.B. gegen UV-Strahlung), Filter (z.B. gegen UV-Strahlung), Farbstoffe.
- Wirkstoffe können durch den Einschluß stabilisiert werden (gegen Licht, Temperatur, Oxidation, Hydrolyse, Verdampfung) und kontrolliert freigesetzt werden.

Durch die Möglichkeit der Cyclodextrine schwer wasserlösliche Stoffe zu komplexieren, ergeben sich auch völlig neue Eigenschaften der Materialien.

So wird die Einlagerung von Schweiß- bzw. Schweißabbauprodukten in das textile Material durch Komplexierung dieser Stoffe verhindert. Damit ist auch eine einfache Reinigung der entsprechenden Materialien verbunden (Austausch der Schweißprodukte gegen die Tenside in der Waschlösung). Nach dem Waschen bleibt kein Schweißgeruch mehr auf dem Material zurück.

Durch Komplexierung von Schweiß bzw. Schweißabbauprodukten wird der Geruch beim Tragen dieser textilen Materialien deutlich vermindert.

Bei Mischfasern läßt sich durch Ausrüstung mit Cyclodextrin-derivaten die Hydrophilie und Benetzbarkeit der Fasern und damit der Tragekomfort erhöhen.

Die beschriebenen erfindungsgemäßen Cyclodextrinderivate können als Stärkeersatz z.B. für dauerhafte Knitterfestigkeit verwendet werden.

Das an textiles Material oder Leder gebundene Cyclodextrin-Derivat kann auch als Haftvermittler z.B. für polymere Stoffe mit lipophilen Resten eingesetzt werden. Damit lassen sich textile Materialien oder Leder auch mit völlig neuartigen Stoffen bequem ausrüsten.

Durch die Umsetzung mit Cellulose, Cellulosederivaten, polymeren Zuckern oder deren Derivaten, Gelatine, Polyvinylalkohole oder PVA-Derivaten oder Polyallylaminen lassen sich Membranen, Folien, Filme, etc. herstellen. Diese sind für Extraktionszwecke, z.B. Ultrafiltration, reverse Osmose, Dialyse, etc. besonders geeignet.

Durch Umsetzung mit den erfindungsgemäßen Cyclodextrinderivaten lassen sich bekannte Chromatographiematerialien in ihren Eigenschaften modifizieren. Beispielsweise läßt sich die Selektivität dieser Materialien stark erhöhen. Zur Modifizierung geeignete Chromatographiematerialien sind beispielsweise Kieselgel, Agarose, Cellulose, Dextran, Silica, Kieselgur-vernetzte Cellulose oder Kieselgur-Agarose-Matrices.

Die erfindungsgemäßen Cyclodextrinderivate eignen sich ferner für alle für Cyclodextrine und Cyclodextrinderivate bekannten Anwendungen. Beispielsweise seien genannt die Solubilisierung von in Wasser nicht- oder schwerlöslichen Substanzen im Pharmabereich beispielsweise zur Erhöhung der Bioverfügbarkeit eines Medikamentes, in der Lebensmitteltechnologie z.B. zur Stabilisierung von Antioxidantien, im Kosmetikbereich, z.B. zur Stabilisierung flüchtiger Substanzen oder im Agrobereich z.B. zur Formulierung von Wirkstoffen sowie die bekannten Anwendungen in der Verfahrenstechnik (z.B. Trennungen).

Erfindungsgemäße cyclodextrinhaltige Polymere eignen sich insbesondere für Anwendungen in der Chromatographie oder für Trennungen.

Die folgenden Beispiele dienen der weiteren Erläuterung der Erfindung.

Zur Charakterisierung der Cyclodextrinderivate wurden folgende Methoden angewendet:

Dünnschichtchromatogramm (DC):

Laufmittel: Acetonitril/n-Butanol/konz. Ammoniak/Wasser = 5/2/1/4.
DC-Platten: Kieselgel, Fa. Merck Art. Nr. 802815.

$^1$H-bzw. $^{13}$C-NMR

Der $DS_{Cl}$-Wert für die stickstoffhaltigen heterozyklischen Reste erfolgte bei den Cyclodextrinderivaten der Beispiele wie folgt:

Zu 1 g des zu untersuchenden erfindungsgemäßen Cyclodextrinderivates (bei Proben mit hohem Salzgehalt entsprechend mehr) in 4,5 ml Wasser wurden 4,5 ml Diethylamin und 4,5 ml Wasser gegeben. Die Lösung wurde 20 h bei Raumtemp. gerührt und anschließend i. Vak. einrotiert, nochmals mit Wasser versetzt und erneut zur Trockene eingedampft. Danach wurde der Rückstand in 20 ml dest. Wasser aufgenommen, 2 d gegen dest. Wasser dialysiert (benzoylierte Cellulose: Sigma Art. Nr.: D 7884) und erneut zur Trockene eingedampft. Evtl. vorhandener Niederschlag wird abfiltriert. Er enthält kein Cyclodextrin.

Danach kann der durchschnittliche Substitutionsgrad ($DS_{Cl}$) pro Anhydroglukose an aktivem Chlor durch $^1$H-NMR bestimmt werden (d6-DMSO / Trifluoressigsäure). Er ergibt sich aus folgender Formel:

$$DS_{Cl} = (1/6 * I1) / ((I2 - 2/3 * I1) / 7)$$

dabei bedeuten:

I1 = Integral der Methylprotonen des Diethylamins von 0,5 - 1,75 ppm, I2 = Gesamtintegral aller Protonen der Anhydroglukose des Cyclodextrinderivats und der Methylenprotonen des Diethylamins von 2,75 - 6 ppm.

Die Bestimmung der DS Werte für die übrigen ggf. noch in den erfindungsgemäßen Derivaten vorhandenen Reste erfolgte wie aus dem Stand der Technik bekannt.

Zur Charakterisierung der Cyclodextrinpolymere wurden ferner folgende Methoden angewendet:

IR-Spektroskopie

Messung des Ausbleichens einer alkalischen Phenolphthaleinlösung (1N NaOH)
Messung: DC-Scan in Reflexion bei 572 nm

Dispersionen wurden in einem doppelwandigen 2-l-Reaktionsgefäß mit Ankerrührer hergestellt. Die Monomeren und Hilfsstoffe wurden mittels Feindosiergefäßen zugegeben. Die Katalysatoren z.B. (APS/Brüggolit) wurden als 4-%ige bzw. 2%-ige Lösungen mit der Schlauchpumpe eindosiert. Die Temperatur wurde mit Hilfe eines Thermostaten und eines Innentemperaturreglers z.B. bei 45°C konstant gehalten.

Die so hergestellten Dispersionen wurden bezüglich Festgehalt, Restmonomergehalt, Viskosität, K-Wert und Teilchengröße charakterisiert. Naßrückstand und Dispersionsstabilität wurden beurteilt.

Zur Beurteilung der Filmeigenschaften der in den Beispielen hergestellten Dispersionen wurden die Dispersionen in eine Form gegossen und anschließend getrocknet. Es resultierte ein Film mit einer Foliendicke von ca. 1 mm. Die Festigkeit, Klebrigkeit, das Ausschwitzen, Aussehen und die Härte des Films wurden visuell beurteilt.

Beispiel 1: Herstellung von 2-Chlor-4-hydroxy-triazinyl-β-Cyclodextrin (Natrium-Salz) $DS_{Cl}$ 0,3 durch Umsetzung von β-Cyclodextrin mit Cyanurchlorid

10 g Wasser und 10 g Eis wurde mit 1,2 g NaOH in einem Rundkolben vorgelegt. Innerhalb von 30 min. wurden unter kräftigem Rühren bei einer Temperatur von 0 bis 5°C 5,5 g Cyanurchlorid in drei gleichen Portionen zugegeben. Bei pH 7 und einer Temperatur von 0-15°C wurde anschließend eine Lösung von 10 g β-Cyclodextrin (10% Wassergehalt), in 10 ml Wasser und 1,2 g NaOH langsam und unter kräftigem Rühren zur Suspension getropft. Nach 1,5 h unter Rühren wurde ein pH = 7 erreicht. Die noch kalte Suspension wurde mittels einer Fritte abgesaugt und der Niederschlag verworfen. Nach Gefriertrocknung des Filtrates erhielt man 13,8 g des Chlortriazinyl-β-Cyclodextrins mit einem Aschegehalt von 25,5%.

Der durchschnittliche Substitutionsgrad an aktivem Chlor betrug $DS_{Cl}$ = 0,3. Die Wasserlöslichkeit lag bei über 50% (g/g). Im Dünnschichtchromatogramm war kein β-Cyclodextrin mehr nachweisbar.

Beispiel 2: Herstellung von 2-Chlor-4-hydroxy-β-Cyclodextrin (Natrium-Salz) $DS_{Cl}$ = 0,4

In einem 2 l Rundkolben wurden 300g Wasser, 0,6 g Texapon K 12 und 150 g Eis vorgelegt. Danach wurden bei 0°C 118,8 g Cyanurchlorid in einer Portion zugegeben und unter Rühren dreimal evakuiert und wieder belüftet. Danach wurden 25,95 g Natronlauge, gelöst in 270 g Wasser, innerhalb von 1 Stunde zugetropft. Die Temperatur stieg daraufhin auf 3°C an. Der pH-Wert der Lösung lag an dieser Stelle über pH=12. Es wurde weiter gerührt bis der pH-Wert auf pH=7-8 gesunken war. Danach gab man innerhalb von 10 min. 5,19 g Natronlauge in 150 g Wasser gelöst hinzu. Der pH-Wert lag danach bei pH=11. Anschließend wurde sofort bei 0-5°C mit der Zugabe von 108 g β-Cyclodextrin (10% Wassergehalt), gelöst in 270 g Wasser mit 25,95 g Natronlauge, begonnen. Die Zugabe dauerte 1 h. Danach lag der pH bei pH>12. Es wurde weitergerührt bis der pH-Wert auf pH=11 gesunken war und anschließend mit ungefähr 20 ml 0,8 % Phosphorsäure auf pH=8-8,5 eingestellt und bei 0-5°C über eine Fritte abgesaugt. Der Niederschlag wurde verworfen, das Filtrat gefriergetrocknet. Man erhielt so das gewünschte Cyclodextrinderivat mit $DS_{Cl}$=0,4 und einem Aschegehalt von 32%.

Beispiel 3: Herstellung von 2-Chlor-4-hydroxy-triazinyl-β-Cyclodextrin (Natrium-Salz) $DS_{Cl}$ 0,9

39,6 g Cyanurchlorid wurden unten starkem Rühren in 150 g Wasser bei 2 °C vorgelegt. Anschließend wurden 8,65 g NaOH in 28 g Wasser innerhalb 15 min. bei 2-3 °C Innentemp. zugetropft. Nach Dosierende lag der pH-Wert der Suspension bei pH =10-11. Danach wurden 36 g β-Cyclodextrin (10% Wassergehalt) - gelöst in in 54 g Wasser mit 8,65 g NaOH - innerhalb von 40 min. bei 5-7°C zugegeben. Nach Zugabe wurde noch 25 min bei 7°C gerührt, wobei der pH-Wert langsam auf pH = 9-10 fällt. Nach Filtration über eine Glasfritte wurde der pulvrige Niederschlag verworfen und das Filtrat, das einen pH = 7 hatte, gefriergetrocknet. Man erhielt so 67 g des Triazinyl-β- Cyclodextrinderivates mit 32 % Aschegehalt (g/g) und einem $DS_{Cl}$- Wert von 0,9.

Beispiel 4: Herstellung von 2-Chlor-4-hydroxy-triazinyl-β-Cyclodextrin (Natrium-Salz) $DS_{Cl}$ 1,5 durch Umsetzung von β-Cyclodextrin mit Cyanurchlorid

20 g Wasser und 20 g Eis wurden mit 3,6 g NaOH vorgelegt. Danach wurde innerhalb von 45 min. bei T = 0 - 5 °C 16,5 g Cyanurchlorid in vier Portionen zugegeben. Bei pH = 7 wurden anschließend 10 g β-Cyclodextrin (90%) -gelöst in 30 ml Wasser mit 3,6 g NaOH -bei T = 0-15°C langsam zur Suspension getropft. Nach 2 h wurde ein pH = 7 erreicht. Die noch kalte Suspension wurde abgesaugt und der Niederschlag verworfen. Nach Gefriertrocknung des Filtrates erhielt man 17,54 g des Chlortriazinyl-β-Cyclodextrins mit einem Salzgehalt von 44%. Der durchschnittliche

Substitutionsgrad an aktivem Chlor betrug $DS_{Cl}$ = 1,5. Die Wasserlöslichkeit lag bei über 25% (g/g). Im Dünnschichtchromatogramm war kein β-Cyclodextrin mehr nachweisbar.

Beispiel 5: Herstellung von 2-Chlor-4-hydroxy-triazinyl-β-Cyclodextrin, (Na-Salz) $DS_{Cl}$ 0,5 durch Umsetzung von β-Cyclodextrin mit Cyanurchlorid

In einem 63 l - Kessel mit Email-Belag wurden 10 kg Wasser auf 1°C abgekühlt und mit 8,6 kg Eis versetzt. Nach Zugabe von 10 g Natriumdodecylsulfat als Emulgator wurden 2 kg Cyanurchlorid zu der gut gerührten Lösung gegeben. Anschließend wurde eine Lösung von 0,868 kg Natriumhydroxyd in 4 kg Wasser bei einer Temperatur von 0-5°C innerhalb von 5 h zugetropft. Der pH-Wert sollte während dieser Zeit unterhalb von pH=12 liegen. Nach der Laugenzugabe wurde die Reaktionslösung noch 0,5 h bei 5°C gerührt. Man erhielt so eine klare Lösung des Natriums-Salzes von 2,4-Dichlor-6-hydroxy-1,3,5-triazins in Wasser. Zu dieser gut gerührten Lösung tropfte man anschließend bei 5-15°C innerhalb von 2 h eine Mischung von 3,08 kg β-Cyclodextrin, 0,434 kg Natriumhydroxyd und 4 kg Wasser. Während dieser Zugabe sollte der pH-Wert zwischen pH = 10 und pH = 13 liegen. Es wurde noch 1-2 h weitergerührt bis keine pH-Änderung mehr eintrat. Der pH-Wert lag anschließend bei pH = 9,6. Die Lösung kam dabei auf Raumtemperatur. Sie wurde anschließend über ein 0,45/0,2 µm-Filter filtriert. Nach Sprühtrocknung der Lösung (Eintrittstemperatur = 235°C, Austrittstemp. = 120 °C) erhielt man so 5,4 kg des Triazinyl-β-Cyclodextrinderivats mit einem Aschegehalt von 22%. Der durchschnittliche Substitutionsgrad an aktivem Chlor betrug $DS_{Cl}$ = 0,52. Die Wasserlöslichkeit lag über 55% (g/g). Im Dünnschichtchromatogramm war kein β-Cyclodextrin mehr nachweisbar.

Beispiel 6: Herstellung von 2-Chlor-4-hydroxy-triazinyl-β-Cyclodextrin, (Na-Salz) $DS_{Cl}$ 0,5 durch Umsetzung von β-Cyclodextrin mit dem Natrium-Salz von 2,4-Dichlor-6-hydroxy1,3,5-triazin

In einem 63 l - Kessel mit Email-Belag wurden 25 kg des Natriums-Salzes von 2,4-Dichlor-6-hydroxy-1,3,5-triazin als 8%-Lösung in Wasser gegeben und unter Rühren auf 10°C abgekühlt. Zur gut gerührten Lösung wurde anschließend innerhalb von 2 h bei 10-15°C eine (gekühlte) Lösung von 3 kg β-Cyclodextrin und 0,426 kg Natriumhydroxid in 4 kg Wasser zugetropft. Der pH-Wert lag während des Zutropfens bei pH = 10-13. Nach Zugabe der β-CD-Lösung wurde die Reaktionsmischung ohne Kühlung noch 2 h weitergerührt bis keine pH-Änderung mehr eintrat. Die Lösung kam dabei auf Raumtemperatur. Die Lösung wurde anschließend über ein 0,45/0,2 µm-Filter filtriert. Nach Sprühtrocknung der Lösung (Eintrittstemperatur = 235°C, Austrittstemp. = 120 °C) erhielt man so 5,5 kg des Triazinyl-β-Cyclodextrinderivats mit einem Aschegehalt von 22%. Der durchschnittliche Substitutionsgrad an aktivem Chlor betrug $DS_{Cl}$ = 0,5. Die Wasserlöslichkeit lag über 55% (g/g). Im Dünnschichtchromatogramm war kein β-Cyclodextrin mehr nachweisbar.

Beispiel 7: 2-Chlor-4-hydroxy-triazinyl-γ-Cyclodextrin (Natrium-Salz) $DS_{Cl}$ 0,9 durch Umsetzung von γ-Cyclodextrin mit Cyanurchlorid

20 g Wasser und 10 g Eis wurden mit 2,4 g NaOH vorgelegt. Danach wurde innerhalb von 30 min. bei T = 0 - 5 °C 11 g Cyanurchlorid in drei Portionen zugegeben und so lange bei 5°C gerührt bis ein pH = 7 erreicht wurde. Zur Suspension wurden 1,2 g NaOH gegeben. Anschließend gab man 10 g γ-Cyclodextrin (gelöst in 20 ml Wasser mit 1,2 g NaOH) bei T = 0-15°C langsam zur Suspension. Nach 1,5 h wurde ein pH = 7 erreicht. Die noch kalte Suspension wurde abgesaugt und der Niederschlag verworfen. Nach Gefriertrocknung des Filtrats erhielt man 20,9 g des Chlortriazinyl-γ-Cyclodextrins mit einem Aschegehalt von 33% (g/g). Der durchschnittliche Substitutionsgrad an aktiven Chlor betrug $DS_{Cl}$ = 0,9, die Wasserlöslichkeit lag bei 25% (g/g). Im Dünnschichtchromatogramm war kein γ-Cyclodextrin mehr nachweisbar.

Beispiel 8: Chlortriazinyl-β-Hydoxypropylcyclodextrin MS(hydroxypropyl)0,77, $DS_{Cl}$ 0,7 durch Umsetzung von Hydroxypropyl-β-cyclodextrin mit Cyanurchlorid

20 g Wasser und 10 g Eis wurden mit 2,4 g NaOH vorgelegt. Danach wurde innerhalb von 30 min. bei T = 0 - 5 °C 11 g Cyanurchlorid in vier Portionen zugegeben. Bei pH = 7 wurden anschließend 10 g HP-β-Cyclodextrin MS 0,77 -gelöst in 20 ml Wasser mit 2,4 g NaOH -bei T = 0-15°C langsam zur Suspension getropft. Nach 1,5 h wurde ein pH = 7 erreicht. Die noch kalte Suspension wurde abgesaugt und der Niederschlag verworfen. Nach Filtration und Gefriertrocknung des Filtrates wurden 21,4 g des Chlortriazinyl-β-hydroxypropyl-cyclodextrinderivates erhalten. Die Löslichkeit in Wasser betrug 25% (g/g), der Aschegehalt bei 33% (g/g). Der durchschnittliche Gehalt an aktivem Chlor pro Anhydroglukoseeinheit betrug $DS_{Cl}$ = 0,7.

Beispiel 9: Herstellung von Dichlortriazinyl-β-Cyclodextrin $DS_{Cl}$ 1,0 durch Umsetzung von β-Cyclodextrin mit Cyanurchlorid

9,1 g β-Cyclodextrin und 2 g NaOH wurden in 26 g Wasser vorgelegt. Innerhalb von 30 min wurden 7,36 g Cyanurchlorid bei 2 °C in 3 Portionen zugegeben und gerührt. Nach 2 h lag der pH-Wert bei pH = 7,2. Durch Zugabe von 4 g $Na_2HPO_4$ und 6g $KH_2PO_4$ in 50 g Wasser wurde der pH-Wert stabilisiert. Die Lösung wurde kalt filtriert und anschließend gefriergetrocknet. Man erhielt 19,6 g des Dichlortriazinyl-Cyclodextrinderivats mit 39% Aschegehalt. Der $DS_{Cl}$ an aktivem Chlor betrug 1,0.

Beispiel 10: Umsetzung von 3-N-Ethylamino-2-hydroxypropyl-β-Cyclodextrin (MS 0,17) mit Cyanurchlorid (Anknüpfung des Cyclodextrins an den Heterocyclus über einen Spacer)

3-N-Ethylamino-2-hydroxypropyl-β-Cyclodextrin (MS 0,17) wurde nach der Methode von A. Deratani und B. Pöpping (Makromol. Chem., Rap. Commun. 13, 237-41 (1992)) durch Umsetzung von 3-Chlor-2-hydroxypropyl-β-Cyclodextrin mit Ethylamin hergestellt.

1,1 g Cyanurchlorid wurden in 5 g Wasser, 5 g Eis und 0,24 g NaOH bei einer Temperatur von 0 bis 5°C vorgelegt. Die Suspension wurde solange gerührt bis ein pH-Wert von pH= 7 erreicht wurde. Danach gab man 1 g des basischen β-Cyclodextrinderivates (3-N-Ethylamino-2-hydroxypropyl-β-Cyclodextrin (MS 0,17)) in 5 g Wasser gelöst tropfenweise hinzu. Es wurde 5 Stunden bei T < 5°C gerührt. Durch Zugabe von 4 ml 10% $NaHCO_3$-Lösung (g/g) wurde pH 6,9 eingestellt und die Suspension filtriert. Gefriertrocknung lieferte 1,6 g des gewünschten Cyclodextrinderivates mit einem Salzgehalt von 42 % (g/g). Der durchschnittliche Gehalt an aktivem Chlor pro Anhydroglukose betrug $DS_{Cl}$=0,1.

Beispiel 11: Umsetzung von Hydroxypropyl-β-Cyclodextrin (MS 0,9) mit 2,4,5,6- Tetrachlorpyrimidin

12 g Hydroxypropyl-β-Cyclodextrin (MS 0,9) wurden in 30 g Wasser gelöst. Anschließend wurde unter kräftigem Rühren bei 30-35°C und einem pH-Wert von pH = 6-6,5 innerhalb von 1 h 8,72 g 2,4,5,6-Tetrachlorpyrimidin, gelöst in 30 ml Aceton, hinzugetropft. Der pH-Wert wurde mit einer wässrigen Natronlauge konstant gehalten. Nach Zugabe des Pyrimidins wurde 1 h weitergerührt, das Aceton abgedampft, filtriert und das Filtrat gefriergetrocknet. Man erhielt 5 g der erfindungsgemäßen Reaktivkomponente mit einem Salzgehalt von 31% und einem aktiven Chlorgehalt von $DS_{Cl}$ = 0,5.

Beispiel 12: Herstellung von basischen Cyclodextrinderivaten durch Umsetzung von Monochlortriazinyl-β-Cyclodextrin $DS_{Cl}$ 0,4 (Beispiel 2) mit Diethylamin

1,6 g des Monochlortriazinyl-β-Cyclodextrin $DS_{Cl}$ = 0,4 (Beispiel 2) wurden in 10 ml Wasser gelöst und mit 5 ml Diethylamin versetzt, 20 h bei Raumtemp. gerührt und anschließend i. Vak. einrotiert, nochmals mit Wasser versetzt und erneut zur Trockene eingedampft. Danach wurde der Rückstand in dest. Wasser aufgenommen und 2 d gegen dest. Wasser dialysiert. Der sich gebildete Niederschlag wurde abfiltriert (Er enthält laut $^{13}C$-NMR kein Cyclodextrin). Die Lösung wurde danach zur Trockene eingedampft. Es wurden so 1,6 g des basischen Cyclodextrinderivates erhalten.

Beispiel 13: Herstellung von basischen Cyclodextrinderivaten durch Umsetzung von Monochlortriazinyl-β-Cyclodextrin $DS_{Cl}$ 0,4 mit Ethylamin

Die Umsetzung von Monochlortriazinyl-β-Cyclodextrin $DS_{Cl}$ 0,4 (Beispiel 2) mit Ethylamin erfolgte wie in Beispiel 10 beschrieben. Aus 1 g Monochlortriazinyl-β-Cyclodextrin $DS_{Cl}$ 0,4 wurden 0,8 g des Aminderivats erhalten.

Beispiel 14: Herstellung von Dihydroxy-triazinyl-β-Cyclodextrin

15 g Monochlortriazinyl-β-Cyclodextrin $DS_{Cl}$ 0,4 (Beispiel 2) wurden in 1 l Wasser auf 70°C erhitzt. Der pH Wert sank dabei auf pH=3,9. Innerhalb von 1 h wurde die Lösung mit 3,3 g NaOH - in 22 ml Wasser gelöst - versetzt und zwei weitere Stunden auf 70°C gehalten. Danach wurde mit 2 n HCl auf pH=7 gestellt. Anschließend erfolgte eine Aufkonzentrierung der Lösung auf 80 ml am Rotationsverdampfer.

Diese Lösung wurde anschließend über einen Zeitraum von 60 min. in 720 ml Methanol getropft. Der Niederschlag wurde mit 90% Methanol gewaschen. Man erhielt 7,5 g Dihydroxy-triazinyl-β-Cyclodextrin mit einem Natriumchloridgehalt von 5,8%.

Beispiel 15: Umsetzung von Monochlortriazinyl-β-Cyclodextrin $DS_{Cl}$ 0,4 mit Triethylamin zur Herstellung von geladenen Cyclodextrinderivaten

15 g Monochlortriazinyl-β-Cyclodextrin $DS_{Cl}$ 0,4 hergestellt gemäß Beispiel 2 wurden in 60 ml Wasser gelöst und mit 30 ml Triethylamin versetzt. Bei 60°C wurde die klare Lösung 24 h gerührt. Zur Aufarbeitung wurde im Vakuum einrotiert, der Rückstand in dest. Wasser aufgenommen und gegen dest. Wasser 2 d dialysiert. Nach Gefriertrocknung erhielt man so 19 g des geladenen Cyclodextrinderivates. Der durchschnittliche Substitutionsgrad von Triethylamin pro Anhydroglukose betrug 0,3. Dieses Derivat ist ebenfalls als Reaktivkomponente einsetzbar mit Triethylamin als Abgangsgruppe.

Beispiel 16: Herstellung eines wasserunlöslichen Cyclodextrinoligomers durch Umsetzung von Monochlortriazinyl-β-Cyclodextrin mit sich selbst

7,5 g Monochlortriazinyl-β-Cyclodextrin hergestellt gemäß Beispiel 2 wurden mit 2,5g Natriumcarbonat versetzt, in einer Reibschale gut durchmischt und über Nacht bei 80°C gelagert. Es entstand ein unlösliches Cyclodextrin-Polymer, das im Mörser pulverisiert, in 1 l Wasser ausgiebig gerührt und über eine Fritte abgesaugt wurde. Man erhielt so 4,5 g des unlöslichen Cyclodextrin-Polymers.

Beispiel 17: Herstellung eines mit Cyclodextrin modifizierten Polyallylamins durch Umsetzung von Monochlortriazinyl-β-Cyclodextrin mit Polyallylamin

In 25 g Wasser wurden 5 g Polyallylamin (PAA, käuflich erhältlich beispielsweise bei Aldrich, Steinheim, unter der Bestellnummer 28,321-5) gelöst. Der pH-Wert der Lösung wurde mit NaOH auf pH = 7 eingestellt. Die Lösung wurde mit 0,1 g $Na_2CO_3$ versetzt und auf 40°C erhitzt. Danach erfolgte die Zugabe von 1,7 g Monochlortriazinyl-β-Cyclodextrin $DS_{Cl}$ 0,4 (40% Asche) hergestellt analog Beispiel 2. Die erhaltene Lösung wurde in 45 min auf 98°C erhitzt und mit weiteren 0,3 g $Na_2CO_3$ versetzt und eine Stunde bei dieser Temperatur gehalten. Der pH-Wert lag danach bei pH 6,6. Als Vergeich diente eine Blindprobe mit β-Cyclodextrin anstelle des Triazinylderivates. Hier lag der pH-Wert am Ende der Reaktion bei pH = 9,7. Zur Aufarbeitung wurde der Ansatz mit NaOH auf pH 7 eingestellt und 5 d gegen dest. Wasser dialysiert (Dialyseschläuche erhältlich beispielsweise bei Fa. Sigma, Deisenhofen, unter der Bestellnummer Sigma D 9652) und anschließend gefriergetrocknet. Der Einbau des Triazinylderivates wurde anhand des IR-Spektrums (KBr-Pressling) nachgewiesen. Es entstand aus dem löslichen PAA ein unlösliches Polymer.

Beispiel 18: Darstellung eines mit Cyclodextrin modifizierten Polyvinylalkohols durch Umsetzung von Monochlortriazinyl-β-Cyclodextrin mit Polyvinylalkohol

Die Umsetzung erfolgte wie in Beispiel 17 beschrieben, jedoch mit Polyvinylalkohol (erhältlich beispielsweise bei der Firma Wacker-Chemie, München unter der Bezeichnung Wacker V03/180) als löslichem Polymer. Der pH-Wert lag am Ende der Reaktion bei pH 7,7. Es wurde ein lösliches Polymer erhalten. Durch $^{13}C$-NMR wurde der Einbau des Triazinyl-Derivates nachgewiesen.

Beispiel 19: Darstellung einer mit Cyclodextrin modifizierten Stärke durch Umsetzung von Monochlortriazinyl-β-Cyclodextrin mit Stärke

5 g Stärke (erhältlich beispielsweise bei der Fa. Merck unter der Artikelnummer Merck 1252.0250) wurden bei 98 °C in Wasser gelöst und abgekühlt. Bei 40 °C erfolgte die Zugabe von 0,1 g $Na_2CO_3$ und 1,7 g Monochlortriazinyl-β-Cyclodextrin $DS_{Cl}$ 0,4 (40% Asche) hergestellt analog Beispiel 2. Innerhalb von 45 min. wurde auf 98°C erhitzt. Die Lösung wurde anschließend mit 0,3g $Na_2CO_3$ versetzt und 1 h bei 98°C gehalten.

Es entstand ein Feststoff von gummiartiger Konsistenz. Nach Zugabe von 25 ml Wasser und Abkühlung auf Raumtemperatur erhielt man gummiartige Krümel, die abgetrennt und 5 d gegen dest. Wasser dialysiert wurden (Sigma D 9652). Der Einbau des Triazinderivates konnte durch ein IR Spektum nachgewiesen werden. Das erhaltene Produkt war ein in Wasser unlösliches Polymer.

Beispiel 20: Herstellung einer mit Cyclodextrin modifizierten Cellulose

1,7 g Monochlortriazinyl-β-Cyclodextrin $DS_{Cl}$ 0,4 (40% Asche) hergestellt analog Beispiel 2 wurden in 25 g Wasser gegeben, die Lösung wurde mit 0,1 g $Na_2CO_3$ versetzt und bei 40 °C kurz gerührt. Danach erfolgte die Zugabe von 5g Cellulose (erhältlich beispielsweise bei der Fa. Fluka unter der Bestellnummer 22183). Innerhalb von 45 min. wurde die Lösung auf 98°C erhitzt, wobei nach 15 min. bzw. 30 min. jeweils 0,5 g Natriumchlorid hinzugefügt wurden.

Bei 98°C erfolgte die Zugabe von 0,3 g $Na_2CO_3$. Die Lösung wurde 1 h bei 98°C gehalten. Danach wurde auf Raumtemperatur abgekühlt, die modifizierte Cellulose abgesaugt und gründlich mit Wasser gewaschen. Die Cellulose wurde anschließend 5d gegen dest. Wasser dialysiert (Sigma D 9652). Der Einbau des Triazinyl-derivates wurde anhand des IR-Spektrums nachgewiesen werden. Als Vergleich diente eine 2 h in kochendem Wasser behandelte Cellulose, sowie eine wie oben beschrieben jedoch ohne Zugabe des Triazinyl-Derivates behandelte Cellulose.

Beispiel 21: Umsetzung von Monochlortriazinyl-β-Cyclodextrin $DS_{Cl}$ 0,4 mit Baumwolle

Monochlortriazinyl-β-Cyclodextrine lassen sich wie im folgenden beschrieben leicht mit Soda bei 90-98°C analog gängigen Färbetechniken von Monochlortriazin-Reaktivfarbstoffen auf Baumwolle aufbringen. Die Baumwolle (Style 407 und 467) wurde bezogen von Testfabrics, Inc. (P.O. Box 420/200, Blackford Avenue, Middlesex, N.J. 08846-0420, USA).

20 g Baumwolle wurden in eine Lösung von 8g Monochlortriazinyl-β-Cyclodextrin $DS_{Cl}$ 0,4 (40% Asche) hergestellt analog Beispiel 2 und 0,5 g Soda in 100 ml Wasser getaucht und innerhalb von 45 min. auf 98°C erhitzt. Dabei gab man nach jeweils 15 min. jeweils 2,5 g Natriumchlorid zur Lösung. Bei 98°C erfolgte eine weitere Zugabe von 1,5 g Soda. Es wurde 1 h bei dieser Temperatur fixiert. Der Stoff wurde aus dem Bad genommen und gründlich mit Wasser gewaschen. Durch Messung des Ausbleichens einer alkalischen Phenolphthaleinlösung wurde nachgewiesen, daß Cyclodextrin auf der Baumwolle kovalent gebunden war.

Cyclodextrin entfärbt alkalische Phenolphthaleinlösung (siehe z.B. J. Chem. Soc. Perkin Trans. 2 1992). Die Beschichtung der Baumwolle mit Cyclodextrin kann folglich über das Ausbleichen einer alkalischen Phenolphthaleinlösung (Lösung in 1 N NaOH) bestimmt werden. Die Quantifizierung erfolgte durch einen DC-Scanner bei 572 nm in Reflexionsstellung (Gerät: Desaga, Chromatogramm- Densitometer CD 50), nachdem der Farbstoff in unterschiedlichen Konzentrationen auf die behandelte Baumwolle aufgebracht worden war. Als Vergleich diente jeweils die unbehandelte Baumwolle, sowie Baumwolle, die analog der oben beschriebenen Prozedur behandelt worden war, jedoch mit β-Cyclodextrin an Stelle des Triazinyl-Derivates.

Beispiel 22: Umsetzung von Monochlortriazinyl-β-Cyclodextrin $DS_{Cl}$ 0,4 mit Filterpapier

Mehrere Filterpapiere (30 x 10 cm) wurden mit einer Lösung von 2,6 g Monochlortriazinyl-β-Cyclodextrin $DS_{Cl}$ 0,4 (40% Asche) hergestellt analog Beispiel 2 und 0,63 g Natriumcarbonat in 50 ml Wasser getränkt und bei 80°C über Nacht im Trockenschrank getrocknet. Danach wurden die Papiere 3 mal mit 1,5 l Wasser jeweils 3 h gewaschen. Als Vergleich wurde ein weiteres Filterpapier mit der o.g. Lösung ohne Triazinderivat getränkt und identisch behandelt.

Das mit dem Cyclodextrinderivat beschichtete Papier war wesentlich glatter und fester als das unbehandelte. Die behandelten Papiere entfärbten alkalische Phenolphthaleinlösung wesentlich stärker als die unbehandelten. Das an der Oberfläche gebundene Cyclodextrinderivat war also noch in der Lage, Phenolphthalein zu komplexieren.

Beispiel 23: Lagerstabilität von Monochlortriazinyl-β-Cyclodextrin $DS_{Cl}$ = 0,4

5 g des Monochlortriazinyl-β-Cyclodextrin $DS_{Cl}$ = 0,4 (Beispiel 2) wurden in 50 ml 0,25 M Phosphatpuffer mit unterschiedlichen pH-Werten, in dest. Wasser sowie in dest. Wasser, das mit 2N HCL bzw. 2N NaOH auf pH=1 bzw. pH=14 gestellt worden war, gelöst. Über 46 Tage wurde der pH-Wert der Lösungen und der $DS_{Cl}$-Wert des Cyclodextrinderivates bestimmt.

Ergebnis:

In gepufferten Lösungen um pH=8 ist das 2-Chlor-4-hydroxy-1,3,5-triazinyl-β-Cyclodextrin (Natrium-Salz) besonders stabil.

Tabelle 1:

| pH-Werte | | | | | | | |
|---|---|---|---|---|---|---|---|
| Zeit | Wasser | Wasser | Wasser | Puffer | Puffer | Puffer | Puffer |
| [d] | | pH=1 | pH=14 | pH=5 | pH=6 | pH=7 | pH=8,5 |
| 0 | pH=7 | pH=1 | pH=14 | pH=5,2 | pH=6,2 | pH=7,1 | pH=8,5 |
| 3 | pH=3,6 | | | pH=4,6 | pH=6,2 | pH=7,2 | pH=8,3 |
| 4 | pH=2,88 | | | pH=4,4 | pH=6,2 | pH=7,18 | pH=8 |
| 5 | pH=-0,24 | pH=1 | | pH=4,3 | pH=6,19 | pH=7,16 | pH=7,6 |

Tabelle 1: (fortgesetzt)

| pH-Werte | | | | | | | |
|---|---|---|---|---|---|---|---|
| Zeit | Wasser | Wasser | Wasser | Puffer | Puffer | Puffer | Puffer |
| 10 | pH=-0,27 | | | pH=1,5 | pH=6,1 | pH=7,12 | pH=7,6 |
| 17 | pH=-0,26 | | pH=14 | pH=1,2 | pH=5,97 | pH=7,04 | pH=7,5 |
| 26 | | | | pH=1,4 | pH=5,9 | pH=7 | pH=7,3 |
| 46 | pH=-0,35 | | | pH=1,2 | pH=5,35 | pH=6,66 | pH=7 |

Tabelle 2:

| $DS_{Cl}$-Werte | | | | | | | |
|---|---|---|---|---|---|---|---|
| Zeit | Wasser | Wasser | Wasser | Puffer | Puffer | Puffer | Puffer |
| [d] | | pH=1 | pH=14 | pH=5 | pH=6 | pH=7 | pH=8,5 |
| 0 | 0,4 | 0,4 | 0,4 | 0,4 | 0,4 | 0,4 | 0,4 |
| 3 | 0,34 | | | | | | |
| 5 | 0,21 | 0 | | 0,4 | 0,4 | | |
| 10 | 0,01 | | | 0,05 | | | |
| 17 | 0 | | 0 | | | | 0,37 |
| 26 | | | | 0 | 0,3 | 0,33 | |
| 46 | | | | | | | 0,35 |

Beispiel 24: Dialyse von Monochlortriazinyl-β-Cyclodextrin $DS_{Cl}$ = 0,4

2 g des Monochlortriazinyl-β-Cyclodextrin $DS_{Cl}$ = 0,4 (Beispiel 2) wurden in 10 ml dest. Wasser gelöst und innerhalb von 3 Tagen 5 mal gegen 10 l dest. Wasser, das zuvor mit 2N NaOH auf pH=8,5 gestellt worden war, dialysiert. Der Salzgehalt sank daraufhin auf < 0,5% (g/g). Der $DS_{Cl}$-Wert lag nach der Dialyse bei $DS_{Cl}$=0,35.

Beispiel 25: Bestimmung der Einbaurate des Triazin-Heterocyclus in β-Cyclodextrin bei der Herstellung von 2-Chlor-4-hydroxy-triazinyl-β-Cylodextrin, (Na-Salz) $DS_{Cl}$ 0,5 durch Umsetzung von β-Cyclodextrin mit dem Natrium-Salz von 2,4-Dichlor-6-hydroxy-1,3,5-triazin

In einem 1 l - Rundkolben wurden 785 g des Natriums-Salzes von 2,4-Dichlor-6-hydroxy-1,3,5-triazin als 8%-Lösung in Wasser vorgelegt und unter Rühren auf 10°C abgekühlt. Zur gut gerührten Lösung wurde anschließend innerhalb von 1,5 h bei 10-15°C eine (gekühlte) Lösung von 135,76 g β-Cyclodextrin (Trockengewicht) und 13,4 g Natriumhydroxid in 130 g Wasser zugetropft. Dies ergab einen theoretischen $DS_{Cl}$-Wert von $DS_{Cl}$ 0,4. Der pH-Wert lag während des Zutropfens bei pH = 10-13. Nach Zugabe der β-CD-Lösung wurde die Reaktionsmischung ohne Kühlung noch 4 h weitergerührt bis keine pH-Änderung mehr eintrat. Eine Probe dieser Reaktionsmischung wurde anschließend zur Bestimmung des $DS_{Cl}$-Wertes mit Diethylamin versetzt. Er lag in diesem Versuch bei $DS_{Cl}$ 0,35. Dies entspricht einem Einbau des Triazin-Heterocyclus in β-Cyclodextrin von 87,5%.

Analog wurden weitere Versuche zur Bestimmung der Einbauraten bei Derivaten mit unterschiedlichen theoretischen $DS_{Cl}$-Werten durchgeführt. Über die Ergebnisse gibt folgende Tabelle Auskunft.

| $DS_{Cl}$ (Theorie) | $DS_{Cl}$ (Produkt) | Einbau [%] |
|---|---|---|
| 0.4 | 0.35 | 87.50 |
| 0.6 | 0.49 | 81.67 |
| 0.8 | 0.64 | 80.00 |
| 1 | 0.77 | 77.00 |

Beispiel 26 (Vergleichsbeispiel)

Emulsionspolymerisation ohne MCT-β-CD

In einem Glasreaktor wurden 349 g vollentsalztes Wasser, 5,12 g 20%ige wässrige Lösung des Natriumsalzes von Dihexylsulfosuccinat und 6 g 10%ige Essigsäure vorgelegt. Der pH-Wert der Vorlage wurde mit 10%iger Natronlauge auf 4,0 eingestellt. Unter Rühren wurden jeweils 41 g Styrol und Butylacrylat einemulgiert und auf 50°C aufgeheizt. In einem Dosierbehälter wurden 320 g Wasser, 55,6 g 30%iges Natriumlaurylpolyglycolsulfat, 81,9 g Acrylamid, 369 g Styrol und 369 g Butylacrylat voremulgiert. Der pH-Wert der Voremulsion wurde mit 10%iger Essigsäure auf pH 4,0 eingestellt. Anschließend begann man unter Rühren gleichzeitig mit dem Zudosieren von Lösungen von 12,9 g 40%igem tert.-Butylhydroperoxid in 159 g Wasser und 8,82 g Hydroxymethansulfinsäure in 163 g Wasser. Nach Reaktionsbeginn wurde die Voremulsion über 4 Stunden gleichmäßig zudosiert. Nach beendetem Voremulsionsverlauf dosierte man das Initiatorsystem noch so lange weiter bis der Festgehalt der Dispersion nicht mehr anstieg. Der pH-Wert wurde dabei weiterhin bei pH = 4 gehalten. Anschließend wurde gekühlt. Zur vollständigen Auspolymerisation wurden nun 5,3 ml 10%ige wäßrige tert.-Butylhydroperoxidlösung und 4,3 ml 10%ige wäßrige Hydroxymethansulfinsäurelösung zugegeben.

Es resultierte ein Styrol-Butylacrylat-Copolymerisat mit einem Styrol-Gehalt von 48,5 % (w/w), einem Butylacrylat-Gehalt von 48,5% (w/w) und 3% Acrylamid. Die Dispersion enthielt keinen Grobanteil, und hatte einen Festgehalt von 49% (w/w), einen pH-Wert von 3,5 und eine mittlere Teilchengröße von 210 nm.

Beispiel 27

Emulsionspolymerisation in Gegenwart von MCT-β-CD

In einem Glasreaktor wurden 349 g vollentsalztes Wasser, 5,12 g 20%ige wässrige Lösung des Natriumsalzes von Dihexylsulfosuccinat und 6 g 10%ige Essigsäure und 30 g MCT-β-CD (0,4) in 30 ml Wasser vorgelegt. Der pH-Wert der Vorlage wurde mit 10%iger Natronlauge auf 4,0 eingestellt. Unter Rühren wurden jeweils 41 g Styrol und Butylacrylat einemulgiert und auf 50°C aufgeheizt. In einem Dosierbehälter wurden 320 g Wasser, 55,6 g 30%iges Natriumlaurylpolyglycolsulfat, 81,9 g Acrylamid, 369 g Styrol und 369 g Butylacrylat voremulgiert. Der pH-Wert der Voremulsion wurde mit 10%iger Essigsäure auf pH 4,0 eingestellt. Anschließend begann man unter Rühren gleichzeitig mit dem Zudosieren von Lösungen von 12,9 g 40%igem tert.-Butylhydroperoxid in 159 g Wasser und 8,82 g Hydroxymethansulfinsäure in 163 g Wasser. Nach Reaktionsbeginn wurde die Voremulsion über 4 Stunden gleichmäßig zudosiert. Durch gleichzeitige Dosierung von Natronlauge wurde der pH des Reaktionsgemisches bei pH = 4,0 gehalten. Nach beendetem Voremulsionsverlauf dosierte man das Initiatorsystem noch so lange weiter bis der Festgehalt der Dispersion nicht mehr anstieg. Der pH-Wert wurde dabei weiterhin bei pH=4 gehalten. Anschließend wurde gekühlt. Zur vollständigen Auspolymerisation wurden nun 5,3 ml 10%ige wäßrige tert.-Butylhydroperoxidlösung und 4,3 ml 10%ige wäßrige Hydroxymethansulfinsäurelösung zugegeben.

Es resultierte ein Styrol-Butylacrylat-Copolymerisat mit einem Styrol-Gehalt von 48,5 % (w/w), einem Butylacrylat-Gehalt von 48,5% (w/w) und 3% Acrylamid. Die Dispersion enthielt keinen Grobanteil, und hatte einen Festgehalt von 48,1% (w/w), einen pH-Wert von 4,0 und eine mittlere Teilchengröße von 220 nm.

Beispiel 28

Emulsionspolymerisation in Gegenwart von MCT-β-CD

In einem Glasreaktor wurden 349 g vollentsalztes Wasser, 5,12 g 20%ige wässrige Lösung des Natriumsalzes von Dihexylsulfosuccinat und 6 g 10%ige Essigsäure vorgelegt. Der pH-Wert der Vorlage wurde mit 10%iger Natronlauge auf 4,0 eingestellt. Unter Rühren wurden jeweils 41 g Styrol und Butylacrylat einemulgiert und auf 50°C aufgeheizt. In einem Dosierbehälter wurden 320 g Wasser, 55,6 g 30%iges Natriumlaurylpolyglycolsulfat, 81,9 g Acrylamid, 369 g Styrol und 369 g Butylacrylat voremulgiert. Der pH-Wert der Voremulsion wurde mit 10%iger Essigsäure auf pH 4,0 eingestellt. Anschließend begann man unter Rühren gleichzeitig mit dem Zudosieren von Lösungen von 12,9 g 40%igem tert.-Butylhydroperoxid in 159 g Wasser und 8,82 g Hydroxymethansulfinsäure in 163 g Wasser. Nach Reaktionsbeginn wurde die Voremulsion über 4 Stunden gleichmäßig zudosiert. Nachdem 75% der Voremulsion eindosiert waren, begann man eine Lösung von 30 g MCT-β-CD (0,4) in 30 ml Wasser so zuzudosieren, daß die Dosierung von Voremulsion und MCT-β-CD (0,4) gleichzeitig abgeschlossen waren. Simultan wurde der pH des Reaktionsgemisches durch Zudosierung von 10N Natronlauge bei pH=4 gehalten. Nach beendetem Voremulsionsverlauf dosierte man das Initiatorsystem noch so lange weiter bis der Festgehalt der Dispersion nicht mehr anstieg. Der pH-Wert wurde dabei weiterhin bei pH=4 gehalten. Anschließend wurde gekühlt. Zur vollständigen Auspolymerisation wurden nun 5,3

ml 10%ige wäßrige tert.-Butylhydroperoxidlösung und 4,3 ml 10%ige wäßrige Hydroxymethansulfinsäurelösung zugegeben.

Es resultierte ein Styrol-Butylacrylat-Copolymerisat mit einem Styrol-Gehalt von 48,5 % (w/w), einem Butylacrylat-Gehalt von 48,5% (w/w) und 3% Acrylamid. Die Dispersion enthielt keinen Grobanteil, und hatte einen Festgehalt von 48,8% (w/w), einen pH-Wert von 3,9 und eine mittlere Teilchengröße von 260 nm.

Beispiel 29

Emulsionspolymerisation in Gegenwart von MCT-β-CD

In einem Glasreaktor wurden 349 g vollentsalztes Wasser, 5,12 g 20%ige wässrige Lösung des Natriumsalzes von Dihexylsulfosuccinat und 6 g 10%ige Essigsäure vorgelegt. Der pH-Wert der Vorlage wurde mit 10%iger Natronlauge auf 4,0 eingestellt. Unter Rühren wurden jeweils 41 g Styrol und Butylacrylat einemulgiert und auf 50°C aufgeheizt. In einem Dosierbehälter wurden 320 g Wasser, 55,6 g 30%iges Natriumlaurylpolyglycolsulfat, 81,9 g Acrylamid, 369 g Styrol und 369 g Butylacrylat voremulgiert. Der pH-Wert der Voremulsion wurde mit 10%iger Essigsäure auf pH 4,0 eingestellt. Anschließend begann man unter Rühren gleichzeitig mit dem Zudosieren von Lösungen von 12,9 g 40%igem tert.-Butylhydroperoxid in 159 g Wasser und 8,82 g Hydroxymethansulfinsäure in 163 g Wasser. Nach Reaktionsbeginn wurde die Voremulsion über 4 Stunden gleichmäßig zudosiert. Nach beendetem Voremulsionsverlauf dosierte man das Initiatorsystem noch so lange weiter bis der Festgehalt der Dispersion nicht mehr anstieg. Danach wurde eine Lösung von 30 g MCT-β-CD (0,4) in 30 ml Wasser zudosiert und mit 5 N Natronlauge auf pH = 8 gestellt. Das Reaktionsgemisch wurde 30 Minuten bei 80°C/pH = 8 gehalten, während weiterer 30 Minuten ließ man den pH auf pH = 4 fallen. Anschließend wurde abgekühlt. Zur vollständigen Auspolymerisation wurden nun 5,3 ml 10%ige wäßrige tert.-Butylhydroperoxidlösung und 4,3 ml 10%ige wäßrige Hydroxymethansulfinsäurelösung zugegeben.

Es resultierte ein Styrol-Butylacrylat-Copolymerisat mit einem Styrol-Gehalt von 48,5 % (w/w), einem Butylacrylat-Gehalt von 48,5% (w/w) und 3% Acrylamid. Die Dispersion enthielt keinen Grobanteil, und hatte einen Festgehalt von 49,5% (w/w), einen pH-Wert von 4,0 und eine mittlere Teilchengröße von 350 nm.

Tabelle 4

| Zusammensetzung der Polymerdispersionen | | | | | | | |
|---|---|---|---|---|---|---|---|
| Beispiel | Copolymer | Comonomere | MCT-β-CD(0,4) | Tg [0°C] | FG [%] | pH | Teilchengröße nm |
| 26 | St/BA/AA | 48,5/48,5/3 | - | 20 | 49,0 | 3,5 | 210 |
| 27 | St/BA/AA | 48,5/48,5/3 | 30 g | 20 | 48,1 | 4,0 | 220 |
| 28 | St/BA/AA | 48,5/48,5/3 | 30 g | 15 | 48,8 | 3,9 | 260 |
| 29 | St/BA/AA | 48,5/48,5/3 | 30 g | 10 | 49,5 | 4,0 | 350 |

Beispiel 30

Herstellung von mit Cyclodextrin modifiziertem Nylon

10 g Nylon 6/6 (Fa. Fluka, CH-9471 Buchs, Best.-Nr. 74712) wurden fein gemahlen, in 40 ml Dimethylformamid suspendiert. Nach Zugabe von 1,0 g Natriumcarbonat und 5 g MCT-β-CD (0,4), gelöst in 10 ml DMF wurde auf 80°C erhitzt und 1 h bei dieser Temperatur gehalten. Zur Aufarbeitung wird das Nylon-Granulat abfiltriert, in Wasser suspendiert und filtriert. Der Einbau des Triazinderivates wurde durch 13-C-NMR nachgewiesen.

Beispiel 31

Herstellung von mit Cyclodextrin modifiziertem Polyvinylalkohol

10 g Polyvinylalkohol (Fa. Aldrich, Steinheim, Best.-Nr. 34, 158-4) wurden in 20 ml 10%iger Natronlauge suspendiert, 1 Stunde gerührt und abfiltriert. Das Harz wurde in eine 10%ige Lösung von MCT-β-CD (DS 0,4) in Wasser 15 Minuten gerührt. Anschließend wurde abgekühlt und mit Wasser gespült.

Das so behandelte Polymer zeigte komplexierende Eigenschaften. Beispielsweise komplexiert 1 g des modifizierten Polyvinylalkohols 1,1 mg Hydrocortison aus einer wäßrigen Hydrocortisonlösung (Ausgangskonzentration 1,6 mg in 10 ml). Der als Ausgangsmaterial verwendete Polyvinylalkohol zeigte kein komplexierendes Verhalten.

Beispiel 32

Herstellung von mit Cyclodextrin modifiziertem Polyvinylalkohol

10 g Polyvinylalkohol (Fa. Aldrich, Steinheim, Best.-Nr. 34, 158-4) wurden in 20 ml 10%iger Natronlauge suspendiert, 1 Stunde gerührt und abfiltriert. Das Harz wurde in eine 10%ige Lösung von MCT-β-CD (DS 0,8) in Wasser 15 Minuten gerührt. Anschließend wurde das Harz abfiltriert und im Trockenschrank bei 80°C fixiert. Anschließend wurde abgekühlt und mit Wasser gespült.

Das so behandelte Polymer zeigte komplexierende Eigenschaften. Beispielsweise komplexiert 1 g des modifizierten Polyvinylalkohols 0,7 mg Hydrocortison aus einer wäßrigen Hydrocortisonlösung (Ausgangskonzentration 1,6 mg in 10 ml). Der als Ausgangsmaterial verwendete Polyvinylalkohol zeigte kein komplexierendes Verhalten.

Beispiel 33

Herstellung von mit Cyclodextrin modifiziertem Polyvinylalkohol

10 g Polyvinylalkohol (Fa. Aldrich, Steinheim, Best.-Nr. 34, 158-4) wurden in 20 ml 10%iger Natronlauge suspendiert, 1 Stunde gerührt und abfiltriert. Das Harz wurde in eine 10%ige Lösung von MCT-γ-CD (DS 0,4) in Wasser 15 Minuten gerührt. Anschließend wurde das Harz abfiltriert und im Trockenschrank bei 80°C fixiert. Anschließend wurde abgekühlt und mit Wasser gespült.

Der mit MCT-γ-CD (DS 0,4) modifizierte Polyvinylalkohol zeigte komplexierende Eigenschaften. Beispielsweise komplexiert 1 g des modifizierten Polyvinylalkohols 1.4 mg Hydrocortison aus einer wäßrigen Hydrocortison-Lösung (Ausgangskonzentration 1,6 mg in 10 ml). Der als Ausgangsmaterial verwendete Polyvinylalkohol zeigte kein komplexierendes Verhalten.

Beispiel 34

Herstellung von mit Cyclodextrin modifiziertem Polyethylenimin

20 g Polyethylenimin (50%ige wäßrige Lösung, Fa. Fluka, CH-9471 Buchs, Best.-Nr. 03880), 10 g MCT-β-CD (0,4) und 2 g Natriumcarbonat wurden 4 Stunden auf 98°C erwärmt. Das Produkt hatte gelartige Konsistenz und entfärbte alkalische Phenolphthalein-Lösung, was die komplexierenden Eigenschaften des Produkts belegt (J. Chem. Soc. Perkin Trans. 2, 1992).

Beispiel 35

Herstellung von mit Cyclodextrin modifiziertem Polymethacrylat

Zur Lösung von 40 g MCT-β-CD (0,4) in 60 ml Wasser wurden 10 ml 2-Hydroxyethylmethacrylat gelöst in 10 ml Wasser und 3,2g Natriumhydroxid, gelöst in 10 ml Wasser, gleichzeitig bei 10 bis 20°C zugetropft (Dauer 1 Stunde). Die Lösung wurde dialysiert, wobei der pH mit einem Phosphatpuffer bei pH=8 gehalten wurde.

In einem zylindrischen 1 1-Glasgefäß mit Impellerrührer und Heizmantel werden $N_2$-Schutzgas 405 ml n-Decan mit 4,05 g des Emulgiermittels "Gafac RM 510" der Fa. GAF (Deutschland) GmbH, 5020 Frechen, (komplexer Phosphorsäureester) versetzt und bei 70°C und einer Rührerdrehzahl von 750 Upm gerührt.

Die oben hergestellte Lösung wurde mit 23 g 5 %iger (w/v) wäßriger Kaliumperoxodisulfatlösung versetzt. Diese Lösung gießt man unter Rühren in die n-Decanphase ein. Die entstandene Emulsion wird 2,5 h bei 75°C und 750 Upm gerührt, wobei sich perlförmiges Polymerisat bildet.

Die erhaltene Suspension kühlt man auf 25°C ab und der polymere Feststoff wird abfiltriert, mit 100 ml n-Decan, 150 ml Ethanol, zweimal mit je 150 ml Wasser und schließlich wieder mit 150 ml Ethanol gewaschen. Das Polymer wird 6 h bei 75°C im Vakuum getrocknet.

Man erhält 42 g (Ausbeute: 90%) Polymerisat in Form gleichmäßiger Perlen mit einer mittleren Teilchengröße von 25 µm. Das Polymerisat weist in Wasser eine Quellung von 1,9 g/g sowie ein Gelbettvolumen von 4,0 ml/g auf.

Beispiel 36

Herstellung von mit Cyclodextrin modifiziertem Chitosan

10 g Chitosan (niedermolekular, Fa. Fluka, CH-9471 Buchs, Best.-Nr. 22741), 10 g MCT-β-CD (0,4) und 2 g

Natriumcarbonat wurden 4 Stunden auf 98°C erwärmt. Das Produkt hatte gelartige Konsistenz und entfärbte alkalische Phenolphthalein-Lösung, was die komplexierenden Eigenschaften des Produkts belegt (J. Chem. Soc. Perkin Trans. 2, 1992).

Beispiel 37

Emulsionspolymerisation mit MCT-β-CD

In einem Reaktor, der mit Rückflußkühler, Rührer, Zudosiermöglichkeiten, Stickstoffeinleitung, sowie Heiz- und Kühlmöglichkeiten versehen war, wurden 393 g entmineralisiertes Wasser, 6 g eines Nonylphenolpolyglykolethers (mit im Mittel 23 EO-Einheiten), 2,4 g eines $C_{15}$-Alkylsulfonates, 4,5 g Natriumvinylsulfonat, 50 g MCT-β-CD (DS 0,4), 4g Acrylamid und 1,7 g Acrylsäure vorgelegt und der pH-Wert mit konzentrierter Ammoniaklösung auf 3,5 eingestellt. In diese Lösung wurden 402 g Vinylacetat, 170 g Vinyllaurat und 36 g 2-Ethylhexylacrylat einemulgiert. Es wurde auf 50°C aufgeheizt und mit der Dosierung einer 3,5%igen Ammoniumpersulfatlösung (10,5 g/h) und einer 2%igen Natriumformaldehydsulfoxylatlösung (10,5 g/h) begonnen. Nach Reaktionsbeginn wurden über einen Zeitraum von 4,5 Stunden ein Gemisch von 134 g 2-Ethylhexylacrylat, 101 g Methylmethacrylat, 15 g Hydroxyethylat und 2,5 g Acrylsäure (Dosierung 1) sowie eine Lösung von weiteren 6 g des Nonylphenolpolyglykolethers und 18 g N-Methyloacrylamid in 36 g entmineralisiertem Wasser kontinuierlich zudosiert. Die Dosierung der Ammoniumpersulfatlösung und der Natriumformaldehydsulfoxylatlösung wurde danach noch 2,5 Stunden lang fortgesetzt.

Nach dem Abkühlen erhielt man eine stabile Dispersion mit einem Festgehalt von 61,0%, einem K-Wert (nach Fikentscher, 1% in Tetrahydrofuran/Wasser 93:7 (V/V)) von 101, sowie einer Viskosität von 22 000 mPa.s (Brookfield, 20 UpM).

Beispiel 38 (Vergleichsbeispiel)

Emulsionspolymerisation ohne Einsatz des MCT-β-CD

Die Versuchsdurchführung erfolgte wie in Beispiel 37, wobei allerdings auf den Zusatz der 50 g MCT-β-CD (DS 0,4) verzichtet wurde.

Nach dem Abkühlen erhielt man eine stabile Dispersion mit einem Festgehalt von 60,5%, einem K-Wrt (nach Fikentscher, 1% in Tetrahydrofuran/Wasser 93:7 (V/V)) von 11l, sowie einer Viskosität von 19000 mPa.s (Brookfield, 20 UpM).

Beispiel 39

Die Versuchsdurchführung erfolgte, wie in Beispiel 38 mit der Änderung, daß nach 3,5 h Monomerdosierung zusätzlich über 1 Stunde 30 g MCT-β-CD (DS 0,4) gelöst in 70 g entmineralisiertem Wasser dosiert werden.

Nach dem Abkühlen erhielt man eine stabile Dispersion mit einem Festgehalt von 53 %, einem K-Wert (nach Fikentscher, 1% in Tetrahydrofuran/Wasser 93:7 (V/V) von 110, sowie einer Viskosität von 15000 mPa.s (Brookfield, 20 UpM).

Die Anwendungstechnische Prüfung der Dispersionen aus den Beispielen 37 bis 39 als Kontaktklebstoff erfolgte wie folgt:

Schälstandfestigkeit (bei 23°C und 50% relative Feuchtigkeit)

Die beispielsgemäßen wäßrigen Kontaktklebstoffe und die Dispersionen der Vergleichsbeispiele wurden auf 20 x 2 $cm^2$ große Buchenstäbchen in einer Schichtdicke von 100μ m naß, entsprechend 75 $g/m^2$ trocken, aufgetragen und 45 Minuten unter Normklima (23°C, 50% relative Luftfeuchtigkeit) getrocknet. Anschließend wurde ein PVC-Streifen mit einer Fläche von 15,5 x 2 $cm^2$ so auf das Buchenstäbchen aufgelegt, daß die Klebstoffbeschichtungen miteinander in Kontakt gerieten und nun mit einer 3,5 kg schweren Stahlwalze durch fünfmaliges Hin- und Herrollen angepreßt. Das Aufkleben erfolgte so, daß das freie Ende des PVC-Streifens an einer Querseite des Buchenstäbchen überstand. Man befestigte sofort ein Gewicht von 300 g am freien Ende des PVC-Streifens und fixierte das Buchenstäbchen mit dem PVC-Streifen auf der Unterseite auf eine Weise, daß sich zwischen verklebtem und freiem Ende des PVC-Streifens ein Winkel von 90° einstellte. Die Befestigung des Gewichtes war so ausgebildet, daß die Kraft gleichmäßig über die gesamte Breite des PVC-Streifens wirkte. Man stellte die Zeit fest, in der der PVC-Streifen unter der konstanten Belastung von 300 g auf einer Strecke von 10 cm abschälte. Dazu wurde nach einer Prüfzeit von einem, drei und sieben Tagen die geschälte Strecke ausgemessen und der Quotient aus Prüfzeit in Minuten und Schälstrecke in Zentimetern gebildet. In Tabelle 7 sind die Meßwerte der Schälstandfestigkeiten nach einem, drei und sieben Tagen

aufgeführt. Die angegebenen Werte sind Mittelwerte aus jeweils drei Einzelmessungen.

Scherstandfestigkeit (bei 23°C und 50% relative Feuchtigkeit)

Die beispielsgemäßen wäßrigen Kontaktklebstoffe und die Dispersionen der Vergleichsbeispiele wurden auf Buchenholz-Probekörpern mit Abmessungen von 7 x 2 x 0,5 cm in einer Schichtdicke von 100 µm naß aufgebracht und 20 Minuten unter Normklima getrocknet. Anschließend wurden zwei Probekörper so zusammengelegt, daß die Klebstoffbeschichtungen miteinander in Kontakt gerieten und sich eine überlappte Klebefläche von 4 $cm^2$ ausbildete. Die so fixierten Probekörper wurden 10 Sekunden mit einem Druck von 0,2 $N/mm^2$ zusammengepreßt. Die auf diese Weise hergestellten Verklebungen wurden 24 Stunden unter Normklima gelagert. Anschließend wurden die Probekörper vertikal befestigt und im Winkel von 180°C mit einem Gewicht von 2 kg belastet. Die bis zum Bruch der Klebverbindung verstrichene Zeit in Minuten wurde festgehalten. In Tabelle 6 sind die Meßwerte für die Scherstandfestigkeit aufgeführt. Die angegebenen Werte sind Mittelwerte aus jeweils drei Einzelmessungen.

Wärmescherstandfestigkeit (als Funktion der Temperatur (T))

Die beispielsgemäßen wäßrigen Kontaktklebstoffe und die Dispersionen der Vergleichsbeispiele wurden auf Buchenholz-Probekörpern mit Abmessungen von 7 x 2 x 0,5 cm in einer Schichtdicke von 100 µm aufgebracht und 20 Minuten unter Normklima getrocknet. Anschließend wurden zwei Probekörper so zusammengelegt, daß die Klebstoffbeschichtungen miteinander in Kontakt gerieten und sich eine überlappte Klebefläche von 4 $cm^2$ ausbildete. Die so fixierten Probekörper wurden 10 Sekunden mit einem Druck von 0,2 $N/mm^2$ zusammengepreßt. Die auf diese Weise hergestellten Verklebungen wurden 24 Stunden unter Normklima gelagert. Anschließend wurden die Probekörper vertikal in einem auf 50°C vorgewärmten Trockenschrank befestigt und im Winkel von 180° mit einem Gewicht von 2 kg belastet. Alle 60 Minuten wurde die Temperatur des Trockenschrankes um 25°C erhöht. Die beim Bruch der Klebverbindung herrschende Temperatur und die verstrichene Zeit in Minuten wurden festgehalten. In Tabelle 6 sind die Meßwerte für Wärmescherstandfestigkeit aufgeführt. Die angegebenen Werte sind Mittelwerte aus drei Einzelmessungen.

Reißfestigkeit (bei 23°C und 50% relative Feuchtigkeit)

Die beispielsgemäßen wäßrigen Kontaktklebstoffe und die Dispersionen der Vergleichsbeispiele wurden auf Buchenholz-Probekörpern mit Abmessungen von 12,3 x 3 x 0,3 cm in einer Schichtdicke von 100µm naß aufgebracht und 30 Minuten unter Normklima getrocknet. Anschließend wurden zwei Probekörper so zusammengelegt, daß die Klebstoffbeschichtungen miteinander in Kontakt gerieten und sich eine überlappte Klebefläche von 9 $cm^2$ ausbildete. Die so fixierten Probekörper wurden 10 Sekunden mit einem Druck von 0,8 $N/mm^2$ zusammengepreßt. Die Reißfestigkeit in $N/mm^2$ der auf diese Weise hergestellten Prüfkörper wurde sofort und nach dreitägiger Lagerung unter Normklima mittels einer Zugprüfmaschine (Materialprüfmaschine 1445 der Fa. Zwick) bei einer Geschwindigkeit von 50 mm/min. bestimmt. In Tabelle 5 sind die Meßwerte für die Reißfestigkeiten nach entsprechender Lagerung aufgeführt. Die angegebenen Werte sind Mittelwerte aus jeweils sechs Einzelmessungen.

Schälfestigkeit (bei 23°C und 50% relative Feuchtigkeit)

Die bespielsgemäßen wäßrigen Kontaktklebstoffe und die Dispersionen der Vergleichsbeispiele wurden auf 20 x 2 $cm^2$ große PVC-Streifen (DIN-PVC-Belag) und auf 15,5 x 2 $cm^2$ große Buchenstäbchen in einer Schichtdicke von 100µm naß, entsprechend 75 $g/m^2$ trocken, aufgetragen und 45 Minuten unter Normklima (23°C, 50% relative Luftfeuchtigkeit) getrocknet. Anschließend wurde der PVC-Streifen mit einer Fläche von 155 x 2 $cm^2$ so auf das Buchenstäbchen aufgelegt, daß die Klebstoffbeschichtungen miteinander in Kontakt gerieten und nun mit einer 3,5 kg schweren Stahlwalze durch fünfmaliges Hin- und Herrollen angepreßt. Die auf diese Weise hergestellten Prüfkörper wurden sofort oder nach 3-tägiger Lagerung unter Normklima in einer Zugprüfmaschine (Materialprüfmaschine 1445 der Fa. Zwick) eingespannt und durch Abziehen in einem Winkel von 90° mit einer Geschwindigkeit von 300 min/cm getrennt. Die Schälfestigkeit ist die dazu aufzuwendende Kraft in N/cm. In Tabelle 5 sind die Meßwerte für die Schälfestigkeit nach entsprechender Lagerung aufgeführt. Die angegebenen Werte sind Mittelwerte aus drei Einzelmessungen.

Ergebnisse der Prüfungen:

Die Dispersionen nach den Beispielen 37 u. 39 sowie die Vergleichsdispersion 33 wurden nach obigen Methoden geprüft. Die Ergebnisse sind in den Tabellen 5, 6 und 7 beschrieben

Tab. 5

Reiß- und Schälfestigkeitsprüfungen

| Beispiel | Reißfestigkeit Holz/Holz (N/$mm^2$) | | Schälfestigkeit PVC/Holz (N/cm) | |
|---|---|---|---|---|
| | Raumtemperatur (Anfang) | Raumtemperatur (3 d) | Raumtemperatur (Anfang) | Raumtemperatur (3 d) |
| 37 | > 8000 | 2,18 | 8,35 | 18,30 |
| 39 | > 8000 | 2,75 | 6,00 | 13,60 |
| 38 | > 8000 | 2,20 | 10,10 | 13,10 |

Tab. 6

Scherstand- und Schälstandfestigkeitsprüfungen

| Beispiel | Scherstandfestigkeit Holz/Holz Normklima (min) | (T) (T/min) | Schälstandfestigkeit PVC/Holz (min/cm) Raumtemperatur |
|---|---|---|---|
| 37 | > 8000 | 50/50 | 2120 |
| 39 | > 8000 | 75/14 | 6315 |
| 38 | > 8000 | 50/48 | 1133 |

Tabelle 7

Zeitliche Entwicklung der Schälstandfestigkeit

| Beispiel | Schälstandfestigkeit | | | | | |
|---|---|---|---|---|---|---|
| | 1 Tag | | 3 Tage | | 7 Tage | |
| | cm | min/cm | cm | min/cm | cm | min/cm |
| 37 | 1,1 | 1275 | 2,1 | 1866 | 4,3 | 2120 |
| 39 | 1,1 | 1600 | 1,6 | 3005 | 1,7 | 6315 |
| 38 | 5,2 | 277 | 6,5 | 665 | 8,9 | 1133 |

Beispiel 40

In eine Druckapparatur mit Rührer, Mantelheizung und Dosierpumpen wird eine wäßrige Lösung, bestehend aus folgenden Bestandteilen eingegeben:
10700 g Wasser, 142 g Natriumacetat x 3 $H_2O$, 1760 g einer 20 gew.-%igen wäßrigen Lösung von mit 30 Mol Ethylenoxid oxethyliertem Nonylphenyl, 13700 g einer 5 gew.-%igen wäßrigen Hydroxyethylcelluloselösung (HEC-Lösung) (Viskosität der 2 Gew.-%igen wäßrigen Lösung 300 mPa.s), 572g einer 30gew.%igen wäßrigen Natriumvinylsulfonatlösung, 3,0 g einer 10gew.%igen wäßrigen Eisenammoniumsulfatlösung und 150 g MCT-β-CD. Der pH-Wert der Lösung wird mit 10 Gew.-%iger Essigsäure auf 4 eingestellt.

Die Apparatur wird von Luftsauerstoff befreit und es wird Ethylen in die Apparatur gedrückt. Bei 20 bar Ethylendruck werden 5900 g Vinylacetat und 10% einer Reduktionsmittellösung aus 27,1 g Rongalit in 2 l Wasser eindosiert. Es wird auf 60°C Innentemperatur erhitzt und dabei der Ethylendruck auf 40 bar gesteigert. Nun werden 10% Initiatorlösung aus 27,1 g tert.-Butylhydroperoxid in 2000 g Wasser zudosiert bei einer Innentemperatur von 60°C und es wird zur Abführung der Reaktionswärme gekühlt, 24600 g Vinylacetat, die restlichen 90% der Reduktionsmittellösung und die restlichen 90% der Initiatorlösung werden anschließend zudosiert, wobei der Ethylendruck auf 40 bar gehalten wird. Danach wird eine Lösung aus 3432 g Natriumpersulfat in 300 g Wasser zudosiert und die Innentemperatur auf 80°C erhöht und 1 Stunde bei dieser Temperatur gehalten. Unter Rühren wird anschließend der Großteil des nicht umgesetzten Ethylens ausgegast und in einem Gasometer aufgefangen und es werden 2 l Wasser zugegeben. Dann werden unter Anlegen von Vakuum innerhalb von 2 h 2,6 l Wasser abdestilliert, wodurch der Restvinylacetatgehalt der Dispersion auf 0,05 Gew.-%, bezogen auf die Dispersion, reduziert wird. Durch Wiederholung des Trennverfahrens wird ein Restvinylacetatgehalt von 0,012 Gew.-% erreicht.

Charakterisierung der resultierenden Copolymerisatdispersion

| | |
|---|---|
| Feststoffgehalt (Gew.-%) | 55 |
| pH-Wert (Elektrodenmessung) | 4,5 |
| Viskosität (mPa.s) | 1500 |
| Mindestfilmbildungstemperatur (MFT) | °C < 0 |
| K-Wert (Fikentscher) | 80 |

Beispiel 41

Die Versuchsdurchführung erfolgte wie in Beispiel 40 mit der Änderung, daß 1 Stunde vor Ende der Vinylacetatdosierung 150 g MCT-β-CD in 350 g Wasser zudosiert werden und dafür kein MCT-β-CD vorgelegt wird.

Dispersionsdaten: Feststoffgehalt (Gew.-%) 53 sonst wie bei Beispiel 40

Beispiel 42 (Vergleichsbeispiel)

Die Versuchsdurchführung erfolgte wie in Beispiel 40 nur ohne MCT-β-CD.
Dispersionsdaten wie bei Beispiel 40 nur Viskosität (mPa.s)= 500.
Anwendungstechnische Prüfung der Beispiele 40 bis 42 als Bindemittel zur Herstellung von Innenfarben:
Rahmenrezeptur der für vergleichende Prüfungen hergestellten hochgefüllten Dispersionsinnenfarben

| | Gew.-Teile |
|---|---|
| Wasser | 3110 |
| Methylhydroxyethylcellulose (2-%ige wäßr. Lsg. Visk. 3000 mPa.s) | 60 |
| Na-Salz einer Polyacrylsäure vom MG 2000 (30 gew.-%ige wäßr. Lsg.) | 35 |
| Natriumpolyphosphat (10 gew.-%ige wäßr. Lösung) | 150 |
| Natronlauge (10 gew.-%ige Lösung) | 20 |
| Konservierungsmittel | 15 |
| Entschäumer | 20 |
| Talkum | 600 |

(fortgesetzt)

| | Gew.-Teile |
|---|---|
| Kaolin | 400 |
| Titandioxid | 700 |
| Calciumcarbonat (Teilchengröße 90 Gew.-% < 2µm) | 2300 |
| Calciumcarbonat (Teilchengröße 50 Gew.-% < 2µm) | 1500 |
| Kunststoffdispersion (55 Gew.-%ig) | 1090 |
| Gesamtmenge Dispersionfarbe | 10000 |

Herstellung von Dispersionsinnenfarben gemäß vorstehender Rahmenrezeptur

Die pulverförmige Methylhydroxyethylcellulose wird in das Wasser eingestreut und unter Rühren gelöst, dann werden die Lösungen der Na-Salze von Polyacrylsäure und Polyphosphorsäure und die 10 Gew.-%ige Natronlauge unter Rühren zugegeben. Der erhaltenen viskosen Lösung wird das Konservierungsmittel und der Entschäumer zugesetzt. Unter Rühren mittels eines Dissolvers werden zunächst bei einer Rührgeschwindigkeit von 2000 U/Min. Titandioxid und die Calciumcarbonattypen zugegeben. Es wird weiter 20 Min. bei 5000 U/Min. dispergiert, wobei die Temperatur der Pigment/Füllstoffpaste auf 60°C ansteigt. Man läßt sie auf 30°C abkühlen. Der pH-Wert beträgt 9,3.

Um die Parameter der beschriebenen Kunststoffcopolymerisatdispersionen zu untersuchen, werden jeweils 891 g der Pigment/Füllstoffpaste mit 109 g der jeweils zu prüfenden 55 Gew.-%igen Kunststoffcopolymerisatdispersion verrührt (3 Min. Lenardrührer bei 1500 U/Min). Nach einem Tag werden die so hergestellten Dispersionsfarben mit einem 300 µm -Rakel auf Lenetafolie aufgezogen, die Anstriche nach 5 Tagen Trocknen bei 23°C und 50% rel. Luftfeuchtigkeit mit dem Gardnergerät abgebürstet und die Anzahl der Doppelbürstenstriche (DBS) nach Gardner ermittelt, denen der Anstrich standhält. Dabei bedeuten zunehmende DBS-Zahlen zunehmende Anstrichqualität. Die Ergebnisse können der Tabelle 8 entnommen werden.

Tab. 8

| Copolymerisat-dispersion aus Beispiel Nr. | Anzahl Doppelbürstenstriche (DBS) nach Gardner, denen der Anstrich standhält | Ausreissen des Anstrichs | Wiederholung der Messungen nach Wärmebehandlung des Anstrichs (4 Std., 60°C) | |
|---|---|---|---|---|
| | | | DBS nach Gardner | Ausreißen des Anstrichs |
| 40 | 2100 | nicht | 1800 | nicht |
| 41 | 3120 | nicht | 3080 | nicht |
| 42 | 1240 | stark | 1160 | stark |

Anwendungsbeispiele zur Verwendung als Zusätze zu hydraulischen Bindemitteln.

Anwendungstechnische Untersuchungen:

Bei den Versuchen zur Ermittlung von Biegezug-, Druck- und Haftzugfestigkeiten wurde ein DIN-Mörtel nach DIN 1164 eingesetzt. Bei allen Versuchen wurde mit einem Kunststoff/Zement-Wert von K/Z = 0,15 (K/Z = 0,15 bedeutet 15 Gew.-% Dispersionspulver auf eingesetzte Zementmenge) gearbeitet.

Rezeptur des DIN-Mörtel nach DIN 1164:

| | |
|---|---|
| Portlandzement PZ-35F | 900g |
| Normsand (= 2 Beutel) | 2700g |
| Silicon-Entschäumer S-860 (Fa. Wacker-Chemie) | 7,2 g |
| Wasser | 225 g |
| Dispersion aus den Beispielen 27-29 | 250 g |

Die pulverförmigen Rezepturbestandteile werden zu einem Trockenmörtel vermischt. Der Trockenmörtel wurde zuerst mit Wasser (50% der Menge) angeteigt, dann wurde die Dispersion eingerührt und mit dem restlichen Wasser auf den Wasser/Zement-Wert (W/Z) von 0,40 (Mörtel ohne Dispersionsfestanteil) eingestellt. Zur Herstellung des Vergleichsmörtels aus Dispersion des Beispiels 26 mußte der Wasser/Zement-Wert auf 0,45 erhöht werden, um einen verarbeitbaren Mörtel zu erhalten.

Die Prüfung der Rohmörteleigenschaften zeigt die stark wassereinsparende bzw. verflüssigende Wirkung der erfindungsgemäßen Dispersionen. Die Ergebnisse sind in Tabelle 9 zusammengefaßt.

Tabelle 9:

| Rohmörteldaten | | | | |
|---|---|---|---|---|
| Mörtel aus Dispersion von Beispiel | K/Z | Luftgehalt % | Ausbreitmaß | |
| | | | ohne Rütteln [cm] | nach Rütteln [cm] |
| ohne Dispersion | 0,45 | 3,7 | 10,0 | 13,0 |
| Beispiel 26 | 0,45 | 4,2 | 10,0 | 16,5 |
| 27 | 0,40 | 3,7 | 12,5 | 18,0 |
| 28 | 0,40 | 4,3 | 15,0 | 21,0 |
| 29 | 0,40 | 4,0 | 13,0 | 19,0 |

Für die Prüfung von Biegezugfestigkeiten und Druckfestigkeit wurden Mörtelprismen mit den Maßen 160 x 40 x 40 $mm^3$ nach DIN 1164 hergestellt. Die Ausschalung der Prüfkörper erfolgte nach 2 Tagen. Die Schalung wurde während dieser Zeit abgedeckt.
Die Ergebnisse der Biegezug- und Druckfestigkeitsprüfungen sind in Tabelle 10 zusammengefaßt.

Tabelle 10:

| Festigkeiten nach 28 Tagen Lagerung im Naßklima (23°C, 50% relative Feuchte) | | |
|---|---|---|
| Beispiel | Biegezugfestigkeit ($N/mm^2$) | Druckfestigkeit ($N/mm^2$) |
| ohne Dispersion | 7,88±0,35 | 47,2±2,2 |
| 26 | 8,92±0,24 | 89,8±1,0 |
| 27 | 11,95±0,54 | 46,0±1,0 |
| 28 | 13,60±0,37 | 48,1±1,1 |
| 29 | 12,97±0,86 | 49,5±1,3 |

Für die Prüfung der Haftzugfestigkeit wurden die Mörtel mit einer Traufel unter Verwendung einer Schablone in 4 mm Schichtstärke auf im Normklima (23°C, 50% relative Luftfeuchtigkeit) gelagerte Betonwegplatten (B 550, 40 x 40 $cm^2$) aufgezogen. Die Platten wurden im Normklima gelagert. Einen Tag vor dem Prüftermin wurden pro Platte 6 Probekörper mit einem Kernbohrer ausgebohrt und darauf runde Abzugskrampen (Durchmesser 55 mm, Dicke 10 mm) mit einem Zweikomponentenkleber aufgeklebt. Abgezogen wurde mit einem Abzugsgerät mit einem Laststeigerungsrate von 250 N/sec.

Die Ergebnisse der Haftzugfestigkeit sind in Tabelle 11 zusammengefaßt.

Tabelle 11:

| Haftzugfestigkeiten nach 28 Tagen Lagerung im Normklima (23°C, 50% relative Feuchte). | |
|---|---|
| Beispiel | Haftzugfestigkeit (N/mm$^2$) |
| ohne Dispersion | 1,38 ± 0,11 |
| 26 | 1,81 ± 0,14 |
| 27 | 2,90 ± 0,16 |
| 28 | 3,45 ± 0,14 |
| 29 | 3,10 ± 0,15 |

Beispiel 43

In einem 16 l Rührautoklaven wurden 5200 g Wasser, 97 g des Natriumsalzes eines sulfatierten Nonylphenolpolyglykolethers mit ca. 25 Glykoleinheiten, 48 g eines Alkylsulfonats mit ca. 15 C-Atomen, 21 g Acrylamid, 70 g Acrylsäure und 250 g MCT-β-CD (DS 0,4) vorgelegt und 2160 g Vinylacetat sowie 840 g Vinyllaurat einemulgiert.

Es wurde auf 50 °C aufgeheizt und bis 60 bar mit Ethylen gesättigt. Polymerisationsstart erfolgte durch gleichzeitige Dosierung von jeweils 80 ml/h an 10%iger Ammoniumpersulfatlösung und 5%iger Na-formaldehydsulfoxylatlösung und die Polymerisationsweiterführung durch gleichzeitig Dosierung von jeweils 40 ml/h der beiden Lösungen. Nachdem der Start erfolgt war (erkenntlich an einem Druckanstieg von ca. 2 bar) wurden während 8 h eine Mischung von 2280 g Vinylacetat, 600 g Vinyllaurat und 400 g 2-Hydroxyethylacrylat sowie eine Lösung von 285 g des obigen Nonylphenolpolyglykolethersulfats, 120 g Acrylsäure und 18 g konzentrierte Ammoniaklösung in 530 g Wasser zudosiert. Nach ca. 2 h war der Ethylendruck auf 60 bar gefallen und zur weiteren Aufrechterhaltung dieses Druckes mußte ständig Ethylen nachgedrückt werden.

Nach Dosierende von Monomergemisch und Emulgatorlösung wurde der Ethylendruck noch weitere 1,5 h und die Dosierung der Initiatorlösungen noch weitere 6 h aufrecht erhalten. Der Ethylendruck fiel dabei auf 25 bar.

Nach Abkühlen und Entspannen resultierte eine Dispersion mit 56,6 % Feststoffgehalt, einer Viskosität von 450 mPa.s (Epprecht Rheometer, STV, CIII), einem K-Wert von 84 (nach Fikentscher, Cellulosechemie, Band 13, 58, (1932); gemessen in 1%iger Tetrahydrofuranlösung) und einem Ethylengehalt des Feststoffanteils von 32%.

Beispiel 44

Die Versuchsdurchführung erfolgte wie in Beispiel 43 beschrieben, aber ohne MCT-β-CD in der Vorlage, sondern mit Zusatz von 290 g MCT-β-CD (DS 0,4) in einer 30%igen wäßrigen Lösung (Gew.-%) während 1 h als separate Dosierung mit Dosierstart nach 7 h Monomerdosierung.

Dispersionsdaten: 54,0% Feststoffgehalt, Viskosität 630 m/Pa.s, K-Wert: 91 und Ethylengehalt: 31 %

Beispiel 45

Die Versuchsdurchführung erfolgte wie in Beispiel 43 beschrieben, aber ganz ohne MCT-β-CD.

Dispersiondaten: 56,7% Feststoffanteil, Viskosität 630 m Pa.s, K-Wert: 94 und 30,5% Ethylengehalt.

Prüfmethoden für die Dispersionen gemäß Beispiel 43 bis 45

In der folgenden Meßwerttabelle werden Ergebnisse der Prüfungen von Wärmeschälstandfestigkeit, Oberflächenklebrigkeit, Schälfestigkeit (Klebkraft) und Scherstandfestigkeit von mit den erfindungsgemäßen Dispersionen hergestellten haftklebenden Beschichtungen angegeben. Mit dem Ausdruck "Klebestreifen" werden Streifen aus flexiblem, folienartigen Trägermaterial beschichtet mit einem Film aus einer erfindungsgemäßen Dispersion verstanden.

Es kamen folgende Bestimmungsmethoden zur Anwendung:

a) Wärmeschälstandfestigkeit:

Ein 5 x 8 cm$^2$ großer Klebestreifen wurde mit einer Fläche von 5 x 5 cm$^2$ auf eine Kristallglasplatte aufgelegt und mit einer 2,2 kg schweren mit Silicongummi überzogenen Stahlwalze durch zweimaliges Hin- und Herrollen angepreßt. Das Aufkleben erfolgte so, daß das freie Ende des Klebstreifens an einer Längsseite der Glasplatte

überstand. Man befestigte sofort ein Gewicht von 50 g am freien Ende des Klebstreifens und fixierte die Glasplatte mit dem aufgeklebten Klebestreifen auf der Unterseite in einem auf 50°C vorgewärmte Trockenschrank auf eine Weise, daß sich zwischen verklebtem und freiem Ende des Klebestreifens ein Winkel von 90°C einstellte. Die Befestigung des Gewichts war so ausgebildet, daß die Kraft gleichmäßig über die gesamte Breite des Klebestreifens wirkte. Man stellte die Zeit fest, in der der Klebestreifen bei 50°C unter der konstanten Belastung von 50 g auf einer Strecke von 1 cm abgeschält wurde. Dazu wurde nach einer angemessenen Prüfzeit die geschälte Strekke ausgemessen und der Quotient aus Prüfzeit in Minuten und Schälstrecke in Zentimeter gebildet. Die angegebenen Werte sind Mittelwerte aus jeweils drei Einzelmessungen.

b) Oberflächenklebrigkeit:

Ein 20 cm langer und 2,5 cm breiter Klebestreifen (Trägermaterial: polymerweichmacherhaltiges PVC, 0,1 mm dick) wurde in Form einer "Schlaufe" senkrecht hängend mit der Klebstoffschicht nach außen in den oberen Backen einer Zugprüfmaschine eingespannt. Anschließend wurde die "Schlaufe" durch Zusammenfahren der beiden Bakken der Zugprüfmaschine senkrecht mit einer Geschwindigkeit von 100 mm/Minute auf eine waagerecht befestigte, sorgfältig gereinigte Glasplatte ohne Druckanwendung in einer Länge von etwa 3 cm aufgelegt. Danach erfolgte sofort mit gleicher Geschwindigkeit der Abzug des Klebestreifens von der Glasoberfläche. Die höchste für das Abziehen der "Schlaufe" benötigte Kraft wird als Maß für die Oberflächenklebrigkeit hergenommen.

Der angegebene Wert ist der Mittelwert aus fünf Einzelmessungen, wobei jedesmal ein frischer Klebestreifen und eine frische Glasoberfläche verwendet wurden.

c) Schälfestigkeit (Klebkraft):

Ein 20 cm langer und 2,5 cm breiter Klebestreifen wurde von einem Ende ausgehend in einer Länge von ca. 12 cm auf eine sorgfältig gereinigte Kristallplatte blasenfrei ausgelegt.

Durch 5-maliges Walzen (hin und her) mit einer 2,2 kg schweren mit Silicongummi überzogenen Stahlwalze wurde der Klebestreifen angedrückt. Nach 3-minütiger bzw. 24-stündiger Lagerung im Klimaraum bei 23°C und 50% relativer Luftfeuchtigkeit wurde der Klebestreifen mit einer Geschwindigkeit von 300 mm/Minute im 180° Winkel über eine Länge von 5 cm abgezogen. Die dazu benötigte durchschnittliche Kraft wurde gemessen.
Die angegebenen Werte sind Mittelwerte aus jeweils 5 Einzelmessungen.

Die geprüften Klebstoffdispersionen wurden für alle Messungen mit einem Rakel in einer solchen Dicke auf die Trägerfolien aufgezogen, daß nach dem Trocknen eine gleichmäßige Polymerisatschicht von 24 bis 26 g/m$^2$ zurückblieb.

Die Reinigung der bei den Untersuchungen benutzten Glasoberflächen erfolgte durch mechanisches Entfernen von sichtbaren Verschmutzungen mit Hilfe von Wasser und gegebenenfalls Reinigungsmitteln und anschließender Lagerung in einem Aceton-Bad. Vor der Benutzung der so gereinigten Testoberflächen wurden die Platten mindestens 48 Stunden im Normklima 23°C/50% rel. Luftfeuchtigkeit gelagert.

Tabelle 12:

Prüfwerte von Dispersionsbeschichtungen ca. 25$\mu$ Trockenfilmstärke auf 100$\mu$ starken Weich-PVC-Folien

| Dispersion Beispiel Nr. | Wärmeschälstandfestigkeit | Oberflächenklebrigkeit (N/2,5 cm) | Schälfestigkeit (N/2,5 cm auf Glas mit einer Verklebungszeit von 8 Min. | 24 Std.) |
|---|---|---|---|---|
| 43 | 8000 | 7,4 | 9,0 | 17,9 |
| 44 | 8500 | 6,8 | 9,5 | 18,4 |
| 45 | 8200 | 8,3 | 8,7 | 18,1 |

Beispiel 46

Ausrüstung eines Baumwoll-T-Shirts mit MCT-β-CD 0,5

35 g MCT-β-CD DS 0,438, 5 g Natriumcarbonat
14 g Natriumchlorid
700 g Wasser
70 g Stoff

MCT-β-CD, Natriumcarbonat wurden in Wasser gelöst und das T-Shirt zur Hälfte eingetaucht. Innerhalb von 45 min wurde die Flotte auf 98°C aufgeheizt. Dabei wurden nach 15 min und 30 min jeweils 7 g Natriumchlorid zugegeben. Die Temperatur von 98°C wurde 1 h gehalten. Das T-Shirt wurde aus der Flotte genommen, abgekühlt und mehrmals gründlich mit Wasser heiß und kalt gewaschen.

Das so mit MCT-β-CD ausgerüstete T-Shirt wurde auf der Haut getragen. Auf der mit dem Cyclodextrin-Derivat ausgerüsteten Seite des T-Shirts war deutlich weniger Schweißgeruch festzustellen. Das T-Shirt wurde nach dem Tragen insgesamt 4 mal bei 40°C mit einem normalen Waschmittel in der Waschmaschine gewaschen und erneut getragen. Die Fähigkeit des Materials, Schweißgeruch durch Komplexierung zu binden, war selbst nach dem 4. Waschgang noch vorhanden. Das Cyclodextrin-Derivat mußte folglich kovalent angebunden sein.

Beispiel 47

Ausrüstung eines Baumwoll-T-Shirts mit MCT-β-CD 0,5

20 g MCT-β-CD DS 0,4
1 g Natriumcarbonat
4 g Natriumchlorid
200 g Wasser
109 g Stoff

MCT-β-CD und Natriumcarbonat wurden in 200 ml Wasser gelöst. Das feuchte, gut ausgewrungene Baumwoll T-Shirt wurde anschließend zur Hälfte in diese Lösung getaucht. Nachdem es sich mit der Flotte vollgesogen hatte wurde das T-Shirt in einen Plastikbeutel eingelegt und bei 60°C 4 h im Trockenschrank getempert. Anschließend wurde es mehrmals gründlich mit Wasser heiß und kalt gewaschen.

Das so mit MCT-β-CD ausgerüstete T-Shirt wurde getragen. Auf der mit dem Cyclodextrin-Derivat ausgerüsteten Seite des T-Shirts war deutlich weniger Schweißgeruch festzustellen.

Beispiel 48

Beschichtung von Baumwollstoff mit MCT-β-CD 0,4

1) 1,024g Natriumkarbonat wurden in 45 ml Wasser gelöst. Danach erfolgte die Zugabe von insgesamt 5 g MCT-β-CD 0,4 (wasserfrei) und Rühren bis eine klare Lösung entstand.
2) 1g Baumwollstoff (Style 407, siehe Beispiel 21) wurde anschließend unter ständigem Rühren mit der Pinzette für 5 min in diese vorbereitete Lösung getaucht.
3) Danach wurde der Stoff auf einem PVC-Brett, ca. 50x35 cm, glattgestrichen und mit einem VA-Rohr so lange unter Rollen abgepreßt (die abgepreßte Flüssigkeit wurde immer wieder mit einem Tuch entfernt), bis sich das Gewicht des Stoffes praktisch nicht mehr veränderte. Bei 1g eingesetztem Stoff und einer 10%igen MCT-Lösung lag das Gewicht des feuchten Stoffes bei ca. 1,5g.
4) Nun wurde der Stoff 60 min bei 90 - 100°C im Umluftschrank fixiert.
5) Anschließend erfolgte ein Waschvorgang. Dazu wurde der mit MCT-β-CD fixierte Stoff 3 min unter fließend heißem Wasser und 2 min unter fließend kaltem Wasser gewaschen (dazwischen immer wieder ausgedrückt).
6) Der nasse Stoff wurde nun in der Petrischale über einen Kunststoffstopfen gelegt und bei 90°C im Trockenschank 60 min getrocknet.

7) Der getrocknete Stoff wurde ausgewogen. Die Gewichtszunahme betrug 33 mg.

8) Mit dem trockenen, beschichteten Stoff wurde anschließend der in Beispiel 29 beschriebene Hydrocortisontest durchgeführt.

Die Punkte 2-6 können beliebige Male wiederholt werden, um die Belegung des Stoffes mit MCT-β-CD zu erhöhen.

Beispiel 49

Komplexierung von Hydrocortison durch MCT-beschichtetes Baumwollgewebe

A) Herstellung einer Hydrocortison-Stammlösung:

1) Für die Stammlösung wurden 500 ml VE-Wasser mit 200 mg Hydrocortison ca. 16 h in einer gut verschlossenen Flasche am Laborschüttler geschüttelt. Anschließend wurde der Ansatz erst durch ein Faltenfilter filtriert und danach durch ein Sterilfilter, um ungelöste Feinanteile abzutrennen.

2) Von dieser klaren Lösung wurden 450 ml in einen 500 ml Meßkolben abgefüllt und mit VE-Wasser bis zur Marke aufgefüllt (=Stammlösung).

3) Mit Hilfe der HPLC wurde der Gehalt an gelöstem Hydrocortison in dieser Stammlösung bestimmt. Er betrug 0,253 mg/ml.

B) Komplexierung von Hydrocortison durch MCT-beschichtetes Baumwollgewebe

1) 5 ml der Stammlösung mit 5x0,253 mg = 1,265 mg Hydrocortison und 5 ml VE-Wasser wurden in eine 30 ml Weithalsflasche mit einer Meßpipette pipettiert. 1,033 g mit MCT-β-CD beschichteter, trockener Stoff aus Beispiel 28 wurde gefaltet und mit einem Spatel so in die Lösung gedrückt, daß der Stoff gut durchtränkt wurde.

2) Anschließend wurde am Laborschüttler bei RT 18 h geschüttelt.

3) Die Flüssigkeit wurde über einen Trichter in einen 50 ml Meßkolben dekantiert, der Stoff vorsichtig mit der Pinzette in den Trichter gezogen und mit einem Pistill gut abgepreßt.

4) Der Stoff wurde anschließend in einem Becherglas gewaschen. Dazu wurde er mit der Pinzette in 5 ml VE-Wasser gedrückt anschließend für 5 min in ein Ultraschallbad gestellt.

5) Das Waschwasser wurde wiederum in den Meßkolben dekantiert, der Stoff vorsichtig aus dem Becherglas herausgezogen und mit dem Pistill in einem Trichter wiederum über dem Meßzylinder ausgepreßt.

6) Anschließend wurde der Meßkolben bis zur Marke mit VE-Wasser aufgefüllt.

7) Mit Hilfe der HPLC wurde der Gehalt an nicht komplexiertem Hydrocortison in der Lösung bestimmt.

8) Parallel dazu wurde 1 g eines unbeschichteten Stoffes als Kontrolle völlig gleich behandelt.

Ergebnis:

Während der Hydrocortisongehalt im Meßkolben beim Kontrollversuch mit unbehandeltem Baumwollstoff unverändert bei 1,3 mg lag, so sank er nach dem Eintauchen des behandelten Stoffes auf 0,77 mg. Damit konnte gezeigt werden, daß die Kavität des Cyclodextrins auch nach der Anbindung an Baumwolle noch zur Verfügung stand.

Beispiel 50

Beschichtung von Baumwollstoff mit MCT-β-CD 0,4

1) 1 g Baumwollstoff (Style 407, siehe Beispiel 21) wurde analog Beispiel 48 mit MCT-β-CD 0,4 durch einmaliges Eintauchen in 10% MCT-β-CD belegt (1. Belegung). Anschließend wurde der Hydrocortisontest durchgeführt.

2) Der Stoff wurde in einer Waschmaschine in einem 70°C Waschprogramm mit einem gängigen Waschmittel gewaschen und gespült.

3) Anschließend wurde wiederum der Hydrocortisontest analog Beispiel 49 durchgeführt.

4) Punkt 2) und 3) wurde nochmals wiederholt.

5) Nach der dritten Wäsche wurde der Baumwollstoff nochmals analog Punkt 1) mit MCT-β-CD beladen. Anschließend wurden die Punkte 2), 3) und 4) wiederholt.
6) Wiederum nach der dritten Wäsche wurde der Baumwollstoff nochmals analog Punkt 1) mit MCT-β-CD beladen. Anschließend wurden die Punkte 2), 3) und 4) wiederholt.
7) Parallel dazu wurde 1 g eines unbeschichteten Stoffes als Kontrolle völlig gleich behandelt.

Die folgende Tabelle faßt die Ergebnisse zusammen:

| | Hydrocortisongehalt der Lösung | Hydrocortisongehalt der Lösung nach dem ersten Waschen | Hydrocortisongehalt der Lösung nach dem zweiten Waschen | Hydrocortisongehalt der Lösung nach dem dritten Waschen |
|---|---|---|---|---|
| Gehalt der Testlösung | 1,75 mg | 1,75 mg | 1,75 mg | 1,75 mg |
| Kontrollversuch (unbehandelte Baumwolle) | 1,75 mg | 1,75 mg | 1,75 mg | 1,75 mg |
| Einmalige Belegung mit MCT-ß-CD | 1,30 mg | 1,35 mg | 1,30 mg | 1,30 mg |
| Zweimalige Belegung mit MCT-ß-CD | 1,00 mg | 0,95 mg | 1,0 mg | 1,0 mg |
| Dreimalige Belegung mit MCT-ß-CD | 0,65 mg | 0,70 mg | 0,75 mg | 0,65 mg |

Ergebnis:

Durch diesen Versuch konnte gezeigt werden, daß die Ausrüstung des Stoffes mit MCT-β-CD waschfest ist und daß das kovalent gebundene Cyclodextrin immer wieder erneut mit einem Gast beladen werden kann.

Beispiel 51

Aufbringung des Duftstoffes Frescolat ML auf ein mit MCT-beschichtetes Baumwollgewebe

1) 1 g Baumwollstoff (Style 407, siehe Beispiel 21) wurde mit 5.5% MCT-β-CD beschichtet. Dazu wurde der Stoff analog Beispiel 48 in eine 20% wäßrige MCT-β-CD 0,4 Lösung eingetaucht, entfeuchtet, fixiert, gewaschen und getrocknet.
2) Der beschichtete Stoff wurde nun auf einem Uhrglas in einen Exikator gelegt. Daneben stellte man eine Kristallisierschale mit 10 ml Wasser und ein zweites Uhrglas mit 250 mg Frescolat ML.
3) Der Exikator wurde verschlossen und 16 h bei 50°C in einen Trockenschrank gestellt.
4) Danach ließ man den Exikator auf Raumtemperatur kommen, nahm den leicht feuchten Stoff heraus und trocknete ihn bei Raumtemperatur.
5) Anschließend wurde der Stoff bei 100°C ausgeheizt, um nichtkomplexiertes Frescolat ML zu entfernen.

Ergebnis:

Der trockene Baumwollstoff besitzt keinen Geruch. Wird er jedoch etwas angefeuchtet, so ist sofort die herbal, betont minzige Note des Frescolats ML deutlich erkennbar.

6) Um den Gehalt an Frescolat ML quantitativ zu bestimmen, wurde der Stoff in einem Kolben mit 110 ml Wasser bedeckt und insgesamt 150 min einer flüssig/flüssig-Extraktion mit 50 ml Hexan unterworfen.
7) Die abgekühlte Hexan-Phase wurde in einen 100 ml Meßkolben überführt und bis zur Marke mit Hexan aufgefüllt. Anschließend erfolgte die Gehaltsbestimmung an Frescolat ML über Gaschromatographie.

Ergebnis:

Auf dem Stoff waren insgesamt 2,834 mg Frescolat ML komplexiert.

Beispiel 52

Aufbringung des Duftstoffes Frescolat ML auf ein mit MCT-beschichtetes Baumwollgewebe

1) 1 g Baumwollstoff (Style 407, siehe Beispiel 21) wurde mit 5.5% MCT-β-CD beschichtet. Dazu wurde der Stoff analog Beispiel 48 in eine 20% wäßrige MCT-β-CD 0,4 Lösung eingetaucht, entfeuchtet, fixiert, gewaschen und getrocknet.
2) Der beschichtete Stoff wurde nun in Wasser getaucht und gut abgepreßt. Der nur noch leicht feuchte Stoff wurde anschließend in einen Exikator gelegt. Daneben stellte man ein zweites Uhrglas mit 250 mg Frescolat ML.
3) Der Exikator wurde verschlossen und 16 h bei 50°C in einen Trockenschrank gestellt.
4) Danach ließ man den Exikator auf Raumtemperatur kommen, nahm den leicht feuchten Stoff heraus und trocknete ihn bei Raumtemperatur.
5) Anschließend wurde der Stoff bei 100°C ausgeheizt, um nichtkomplexiertes Frescolat ML zu entfernen.

Ergebnis:

Der trockene Baumwollstoff besitzt keinen Geruch. Wird er jedoch etwas angefeuchtet, so ist sofort die herbal, betont minzige Note des Frescolats ML deutlich erkennbar.

6) Um den Gehalt an Frescolat ML quantitativ zu bestimmen, wurde der Stoff in einem Kolben mit 110 ml Wasser bedeckt und insgesamt 150 min einer flüssig/flüssig-Extraktion mit 50 ml Hexan für insgesamt 150 min unterworfen.

7) Die abgekühlte Hexan-Phase wurde in einen 100 ml Meßkolben überführt und bis zur Marke mit Hexan aufgefüllt. Anschließend erfolgte die Gehaltsbestimmung an Frescolat ML über Gaschromatographie.

Ergebnis:

Auf dem Stoff waren insgesamt 3,481 mg Frescolat ML komplexiert.

**Patentansprüche**

1. Cyclodextrinderivate, **dadurch gekennzeichnet, daß** sie mindestens einen stickstoffhaltigen Heterozyklus mit mindestens einem elektrophilen Zentrum enthalten, wobei die elektrophilen Zentren gleich oder verschieden sind und Kohlenstoffatome sind, an denen Halogen, insbesondere F, Cl, oder ein Ammoniumsubstituent, insbesondere Trialkylammonium oder ein substituierter oder unsubstituierter Pyridinium-Substituent, kovalent gebunden ist.

2. Cyclodextrinderivate der folgenden Formel I:

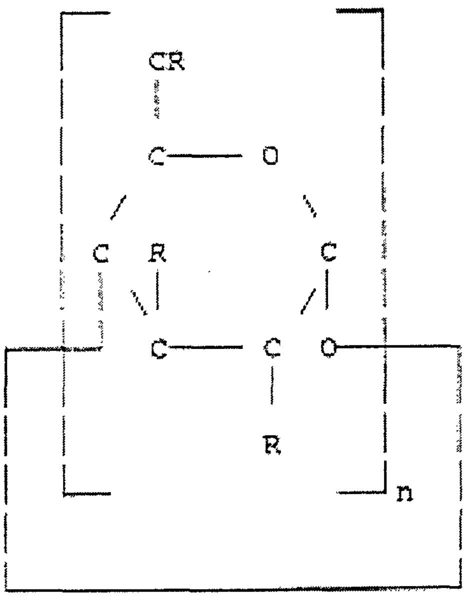

(I),

wobei R OH oder $OR^1$ oder $R^2$ bedeutet und

$R^1$ ein hydrophiler Rest ist, welcher gleich oder verschieden sein kann und

$R^2$ ein entweder direkt angeknüpfter oder ein über einen Spacer mittels einer Ether-, Thioether-, Ester- oder Amin-Bindung angeknüpfter stickstoffhaltiger Heterocyclus ist,

wobei der Spacer ein Alkyl bzw. Hydroxyalkylrest mit 1-12 Kohlenstoffatomen ist, der über eine Ether-, Thioether-, Ester- oder Amin-Bindung an die Anhydroglukose gebunden ist und
der stickstoffhaltige Heterocyclus mindestens einen Halogen- oder einen. Ammonium-Substituenten umfaßt und mindestens einmal pro Cyclodextrin vorhanden ist und
n = 6, 7 oder 8 bedeutet.

3. Cyclodextrinderivate gemäß Anspruch 2, **dadurch gekennzeichnet, daß** R1 gleich oder verschieden ist und Methyl, Ethyl, n- oder i-Propyl, n- oder i-Butyl, $C_2$-$C_6$-Hydroxyalkyl wie Hydroxethyl, Hydroxy-i-propyl, Hydroxy-n-propyl, $C_3$-$C_6$-Oligohydroxyalkyl wie Dihydroxy-i-propyl, Dihydroxy-n- propyl, $C_1$-$C_4$-Carboxyalkyl (in Form der freien Säure oder als Alkalisalz) wie beispielsweise Carboxymethyl, Carboxyethyl, Carboxy-i-propyl, Carboxy-n-propyl oder ein Alkalisalz der genannten Carboxyalkylsubstituenten, Acetyl, Propionyl, Butyryl, Sulfat, $C_1$-$C_4$-Sulfonsäurealkyl (in Form der freien Säure oder als Alkalisalz), $C_2$-$C_4$-Carboxyhydroxyalkyl (in Form der freien Säure oder

als Alkalisalz), $C_2$-$C_4$-Sulfonsäurehydroxyalkyl (in Form der freien Säure oder als Alkalisalz), Oxalyl, Malonyl, Succinyl, Glutaryl, Adipinyl (in Form der freien Säure oder als Alkalisalz) bedeutet und

$R^2$ gleich oder verschieden ist und
$-R^3{}_m-(CHR^4)_o-R^5-R^6$, bedeutet, wobei

$R^3$ gleich oder verschieden ist und O,

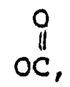

S, NH, oder $NR^7$ bedeutet und

$R^7$ gleich oder verschieden ist und $C_1$-$C_6$ Alkyl bedeutet und

$R^4$ gleich oder verschieden ist und H oder OH bedeutet und

$R^5$ NH, $NR^7$, S, O, oder

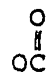

besonders bevorzugt O bedeutet, und

$R^6$ für den Fall, daß $R^5$ NH, $NR^7$, S, oder O bedeutet entweder

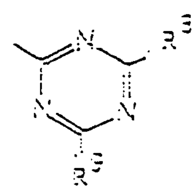

ist,
wobei $R^8$ und $R^9$ gleich oder verschieden sind und Halogen, bevorzugt Cl oder F bedeuten oder $R^8$ $NR^{10}R^{11}$, OH, OAlkali, $OR^7$, O(i-$C_3H_6$), $OCH_2CH_2OCH_3$, $SO_3H$
bedeutet und

$R^9$ Halogen insbesondere Cl oder F oder Ammoniumsubstituent, insbesondere Trialkylammonium oder substituierte oder unsubstituierte Pyridinium- Substituenten, wie z.B.

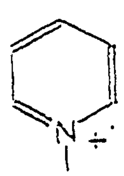 oder 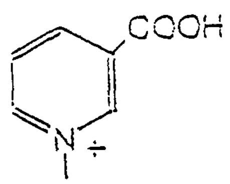 oder 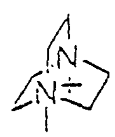 oder 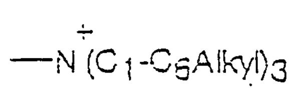

bedeutet und

$R^{10}$ Wasserstoff oder aliphatischer Rest, vorzugsweise $C_1$-$C_4$-Alkylrest, welcher durch $OCH_3$, $OC_2H_5$, COOH,

$OSO_3H$, $SO_3H$, $OCH_2CH_2SO_2CH_2CH_2OSO_3H$, $OCH_2CH_2SO_2CH{=}CH_2$, $OCH_2CH_2SO_2CH_2CH_2Cl$, $SO_2CH_2CH_2OSO_3H$, $SO_2CH{=}CH_2$ substituiert sein kann, oder cycloaliphatischer Rest vorzugsweise 5 bis 6 gliedriger Cycloalkylrest oder araliphatischer Rest vorzugsweise Reste der Formel

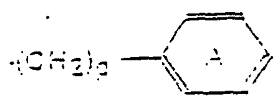

bedeutet,
wobei p = 1-4 bedeutet und der Rest A beispielsweise durch Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$ substituiert sein kann, und

$R^{11}$ die für $R^{10}$ genannten Bedeutungen hat oder Phenylrest oder substituierter Phenylrest vorzugsweise durch Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$ substituierter Phenylrest bedeutet
oder $R^6$

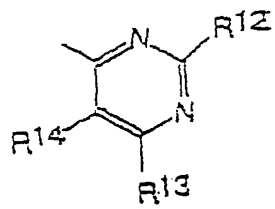

ist,
wobei

$R^{12}$ $R^{13}$ und $R^{14}$ gleich oder verschieden sind und Halogen, vorzugsweise Cl oder F, bedeuten,
bzw. $R^6$ für den Fall, daß $R^5$

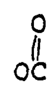

bedeutet

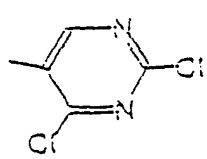

oder

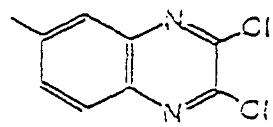

bedeutet und

o eine ganze Zahl von 0 bis 12 ist und

m 0 oder 1 ist, wobei
für o=0 auch m=0 gilt.

4. Cyclodextrinderivate ausgewählt aus der Gruppe 2,4-Dichlor-1,3,5-triazinyl-Cyclodextrine, 2-Chlor-4-hydroxy-1,3,5-triazinyl-Cyclodextrine (Natrium-Salze), 2-Fluor-4-hydroxy-1,3,5-triazinyl-Cyclodextrine (Natrium-Salze), 2,4,5-Trichlorpyrimidyl-Cyclodextrine, 5-Chlor-2,4-difluorpyrimidyl-Cyclodextrine, 6-(2,3-Dichlor)-chinoxalinoyl-Cyclodextrine, 5-(2,4-Dichlor)-pyrimidinoyl-Cyclodextrine, 2-Amino-4-chlor-1,3,5-triazinyl-Cyclodextrine, 2-Chlor-4-ethylamino-1,3,5-triazinyl-Cyclodextrine, 2-Chlor-4-diethylamino-1,3,5-triazinyl-Cyclodextrine, 2-Chlor-4-methoxy-1,3,5-triazinyl-Cyclodextrine.

5. Verfahren zur Herstellung von Cyclodextrinderivaten gemäß einem der Ansprüche 1 bis 4 **dadurch gekennzeichnet, daß** natives α,β und/oder γ-Cyclodextrin und/oder ein geeignetes α,β und/oder γ-Cyclodextrinderivat in einem geeigneten Reaktionsmedium in Gegenwart eines Säureakzeptors und gegebenenfalls eines oberflächenaktiven Mittels in schwach saurem bis stark basischem Milieu bei Temperaturen von -10 bis +70°C mit geeigneten stickstoffhaltigen Heterocyclen umgesetzt und ggf. anschließend im neutralen oder schwach basischen Bereich ggf. unter Zuhilfenahme eines Puffers in ansonsten bekannter Art und Weise aufgearbeitet wird.

6. Lösungen enthaltend Cyclodextrinderivate gemäß einem oder mehreren der Ansprüche 1 bis 4, **dadurch gekennzeichnet, daß** sie einen pH von 7 bis 9 haben.

7. Zusammensetzungen, die Cyclodextrinderivate gemäß einem oder mehreren der Ansprüche 1 bis 4 in gebundener Form enthalten.

8. Selektive Trennmittel für die Chromatographie, **dadurch gekennzeichnet, daß** sie Cyclodextrinderivate gemäß einem oder mehreren der Ansprüche 1 bis 4 bzw. Zusammensetzungen gemäß Anspruch 7 enthalten.

9. Membranen, Folien, Filme, Textilien oder Leder, an welche Cyclodextrinderivate gemäß einem oder mehreren der Ansprüche 1 bis 4 kovalent gebunden sind.

## Claims

1. Cyclodextrin derivative, **characterized in that** they contain at least one nitrogen-containing heterocycle having at least one electrophilic centre, where the electrophilic centres are identical or different and are carbon atoms to which halogen, in particular F or Cl, or an ammonium substituent, in particular trialkylammonium, or a substituted or unsubstituted pyridinium substituent, is covalently bonded.

2. Cyclodextrin derivatives of the following formula I:

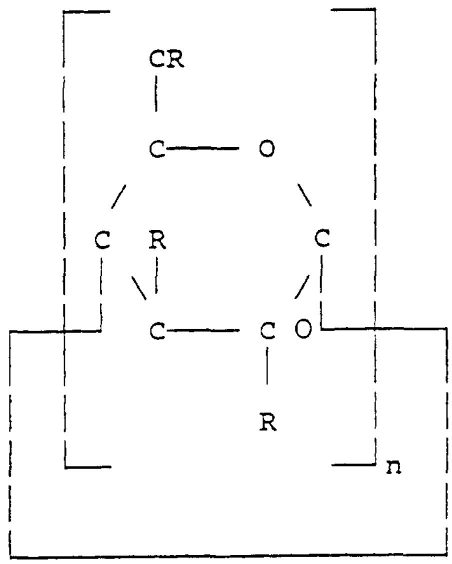

(I),

where R is OH or $OR^1$ or $R^2$ and

$R^1$ is a hydrophilic radical which can be identical or different and

$R^2$ is a nitrogen-containing heterocycle which is either linked directly or via a spacer by means of an ether, thioether, ester or amine bond,

where the spacer is an alkyl or hydroxyalkyl radical having 1-12 carbon atoms, which is bonded to the anhydroglucose via an ether, thioether, ester or amine bond and
the nitrogen-containing heterocycle includes at least one halogen or one ammonium substituent and is present at least once per cyclodextrin and
n is 6, 7 or 8.

3. Cyclodextrin derivatives according to Claim 2, **characterized in that** $R^1$ is identical or different and is methyl, ethyl, n- or i-propyl, n- or i-butyl, $C_2$-$C_6$-hydroxyalkyl such as hydroxyethyl, hydroxy-i-propyl, hydroxy-n-propyl, $C_3$-$C_6$-oligohydroxyalkyl such as dihydroxy-i-propyl, dihydroxy-n-propyl, $C_1$-$C_4$-carboxyalkyl (in the form of the free acid or as an alkali metal salt) such as, for example, carboxymethyl, carboxyethyl, carboxy-i-propyl, carboxy-n-propyl or an alkali metal salt of said carboxyalkyl substituents, acetyl, propionyl, butyryl, sulphate, $C_1$-$C_4$-sulphonylalkyl (in the form of the free acid or as an alkali metal salt), $C_2$-$C_4$-carboxyhydroxyalkyl (in the form of the free acid or as an alkali metal salt), $C_2$-$C_4$-sulphonylhydroxyalkyl (in the form of the free acid or as an alkali metal salt) and oxalyl, malonyl, succinyl, glutaryl or adipyl (in the form of the free acid or as an alkali metal salt) and

$R^2$ is identical or different and
is $-R^3_m-(CHR^4)_o-R^5-R^6$, where

$R^3$ is identical or different and is O,

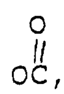

S, NH, or $NR^7$ and

$R^7$ is identical or different and is $C_1$-$C_6$-alkyl and

$R^4$ is identical or different and is H or OH and

$R^5$ is NH, $NR^7$, S, O or

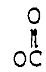

particularly preferably O, and $R^6$, if $R^5$ is NH, $NR^7$, S or O, is either

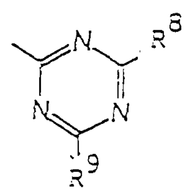

where $R^8$ and $R^9$ are identical or different and are halogen, preferably Cl or F, or

$R^8$ is $NR^{10}R^{11}$, OH, Oalkali metal, $OR^7$, $O(i\text{-}C_3H_6)$, $OCH_2CH_2OCH_3$ or $SO_3H$ and

$R^9$ is halogen, in particular Cl or F, or an ammonium substituent, in particular trialkylammonium, or substituted or unsubstituted pyridinium substituents, such as e.g.

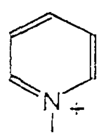 or 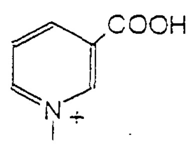 or 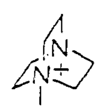 or 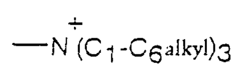

and

$R^{10}$ is hydrogen or an aliphatic radical, preferably a $C_1$-$C_4$-alkyl radical which can be substituted by $OCH_3$, $OC_2H_5$, COOH, $OSO_3H$, $SO_3H$, $OCH_2CH_2SO_2CH_2CH_2OSO_3H$, $OCH_2CH_2SO_2CH{=}CH_2$, $OCH_2CH_2SO_2CH_2CH_2Cl$, $SO_2CH_2CH_2OSO_3H$, $SO_2CH{=}CH_2$, or a cycloaliphatic radical, preferably a 5- to 6-membered cycloalkyl radical, or araliphatic radical, preferably radicals of the formula

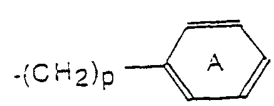

where p = 1-4 and the radical A can be substituted, for example, by Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$, and

$R^{11}$ has the meanings mentioned for $R^{10}$ or is a phenyl radical or substituted phenyl radical, preferably a phenyl radical substituted by Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$
or $R^6$ is

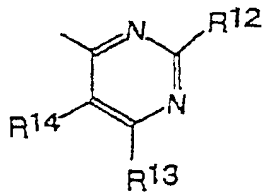

where

$R^{12}$, $R^{13}$ and $R^{14}$ are identical or different and are halogen, preferably Cl or F, or $R^6$, if $R^5$ is

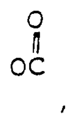

is

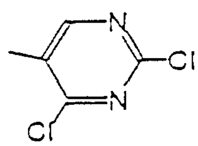

or

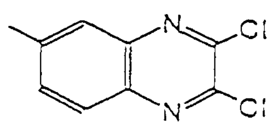

and

o is an integer from 0 to 12 and

m is 0 or 1, where
for o=0, m=0 also applies.

**4.** Cyclodextrin derivatives selected from the group 2,4-dichloro-1,3,5-triazinylcyclodextrins, 2-chloro-4-hydroxy-1,3,5-triazinylcyclodextrins (sodium salts), 2-fluoro-4-hydroxy-1,3,5-triazinylcyclodextrins (sodium salts), 2,4,5-trichloropyrimidylcyclodextrins, 5-chloro-2,4-difluoropyrimidylcyclodextrins, 6-(2,3-dichloro)-quinoxalinoylcyclodextrins, 5-(2,4-dichloro)pyrimidinoylcyclodextrins, 2-amino-4-chloro-1,3,5-triazinylcyclodextrins, 2-chloro-4-ethylamino-1,3,5-triazinylcyclodextrins, 2-chloro-4-diethylamino-1,3,5-triazinylcyclodextrins and 2-chloro-4-methoxy-1,3,5-triazinylcyclodextrins.

**5.** Process for the preparation of cyclodextrin derivatives according to one of Claims 1 to 4, **characterized in that** native α-, β- and/or γ-cyclodextrin and/or a suitable α-, β- and/or γ-cyclodextrin derivative is reacted in a suitable reaction medium in the presence of an acid acceptor and optionally of a surface-active ingredient in weakly acidic to strongly basic medium at temperatures from -10 to +70°C with suitable nitrogen-containing heterocycles and

optionally subsequently worked up in an otherwise known manner in the neutral or weakly basic range, optionally with the aid of a buffer.

6. Solutions containing cyclodextrin derivatives according to one or more of Claims 1 to 4, **characterized in that** they have a pH from 7 to 9.

7. Compositions which contain cyclodextrin derivatives according to one or more of Claims 1 to 4 in bonded form.

8. Selective separating media for chromatography, **characterized in that** they contain cyclodextrin derivatives according to one or more of Claims 1 to 4 or compositions according Claim 7.

9. Membranes, foils, films, textiles or leathers to which cyclodextrin derivatives according to one or more of Claims 1 to 4 are covalently bonded.

## Revendications

1. Dérivés de cyclodextrine, **caractérisés en ce qu'**ils contiennent au moins un hétérocycle contenant de l'azote avec au moins un centre électrophile, les centres électrophiles étant identiques ou différents et étant des atomes de carbone auxquels sont liés par covalence un halogène, en particulier F, Cl, ou un substituant d'ammonium, en particulier du trialkylammonium ou un substituant pyridinium substitué ou non substitué.

2. Dérivés de cyclodextrine présentant la formule suivante I :

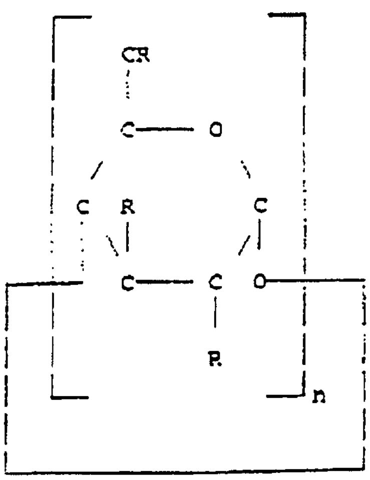

(I),

dans laquelle R signifie OH ou $OR^1$ ou $R^2$ et
$R^1$ est un radical hydrophile qui peut être identique ou différent et
$R^2$ est un hétérocycle contenant de l'azote soit lié directement soit lié via un espaceur au moyen d'une liaison éther, thioéther, ester ou amine,

l'espaceur étant un alkyle ou, selon le cas, un radical hydroxyalkyle comprenant 1 à 12 atomes de carbone, qui est lié via une liaison éther, thioéther, ester ou amine à l'anhydroglucose et
l'hétérocycle contenant de l'azote comprenant au moins un substituant halogène ou ammonium et étant présent au moins une fois par cyclodextrine et
n signifiant = 6, 7 ou 8.

3. Dérivés de cyclodextrine selon la revendication 2, **caractérisés en ce que** $R^1$ est identique ou différent et signifie un méthyle, un éthyle, un n-propyle, un i-propyle, un n-butyle ou un i-butyle, un hydroxy(alkyle en $C_2$ à $C_6$), tel qu'un hydroxyéthyle, un hydroxy-i-propyle, un hydroxy-n-propyle, un oligohydroxy(alkyle en $C_3$ à $C_6$), tel qu'un dihydroxy-i-propyle, un dihydroxy-n-propyle, un carboxy(alkyle en $C_1$ à $C_4$) (sous forme de l'acide libre ou de sel alcalin), tel que par exemple un carboxyméthyle, un carboxyéthyle, un carboxy-i-propyle, un carboxy-n-propyle

ou un sel alcalin des substituants carboxyalkyle mentionnés, un acétyle, un propionyle, un butyryle, un sulfate, un (acide sulfonique)(alkyle en $C_1$ à $C_4$) (sous forme de l'acide libre ou de sel alcalin), un carboxyhydroxy(alkyle en $C_2$ à $C_4$) (sous forme de l'acide libre ou de sel alcalin), un (acide sulfonique) hydroxy(alkyle en $C_2$ à $C_4$) (sous forme de l'acide libre ou de sel alcalin), un oxalyle, un malonyle, un succinyle, un glutaryle, un adipinyle (sous forme de l'acide libre ou de sel alcalin) et

$R^2$ est identique ou différent et signifie
$-R^3{}_m-(CHR^4)_o-R^5-R^6$, groupement dans lequel
$R^3$ est identique ou différent et signifie O,

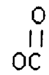 ,

S, NH ou $NR^7$ et
$R^7$ est identique ou différent et signifie un alkyle en $C_1$ à $C_6$ et
$R^4$ est identique ou différent et signifie H ou OH et
$R^5$ signifie NH, $NR^7$, S, O ou

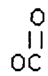 ,

de manière particulièrement préférée O et
$R^6$ signifie, pour le cas où $R^5$ signifie NH, $NR^7$, S ou O, soit est

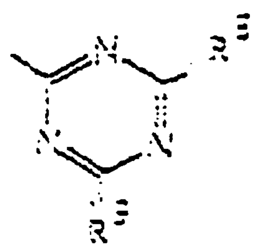

$R^8$ et $R^9$ étant identiques ou différents et signifiant un halogène, de préférence Cl ou F ou
$R^8$ signifiant $NR^{10}R^{11}$, OH, Oalcali, $OR^7$, $O(i\text{-}C_3H_6)$, $OCH_2CH_2OCH_3$, $SO_3H$ et
$R^9$ signifiant un halogène, en particulier Cl ou F ou un substituant ammonium, en particulier un trialkylammonium ou des substituants pyridinium substitués ou non substitués, tels que par exemple

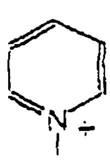 ou 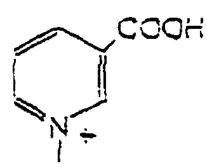 ou 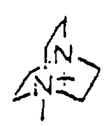 ou 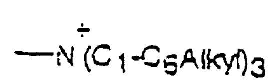

et
$R^{10}$ signifiant un hydrogène ou un radical aliphatique, de préférence un radical alkyle en $C_1$ à $C_4$, qui peut être substitué par $OCH_3$, $OC_2H_5$, COOH, $OSO_3H$, $SO_3H$, $OCH_2CH_2SO_2CH_2CH_2OSO_3H$, $OCH_2CH_2SO_2CH{=}CH_2$, $OCH_2CH_2SO_2CH_2CH_2Cl$, $SO_2CH_2CH_2OSO_3H$, $SO_2CH{=}CH_2$, ou un radical cycloaliphatique, de préférence un radical cycloalkyle de 5 à 6 membres ou un radical araliphatique, de préférence des radicaux de formule

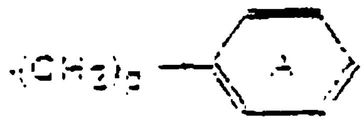

p signifiant = 1 à 4 et le radical A pouvant par exemple être substitué par Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$, et
$R^{11}$ ayant les significations citées pour $R^{10}$ ou signifiant un radical phényle ou un radical phényle substitué, de préférence un radical phényle substitué par Cl, $NO_2$, COOH, $SO_3H$, $CH_3$, $OCH_3$, $SO_2CH_2CH_2OSO_3H$, $SO_2CH{=}CH_2$, $CH_2SO_2CH_2CH_2OSO_3H$, $CH_2SO_2CH{=}CH_2$ soit $R^6$ est

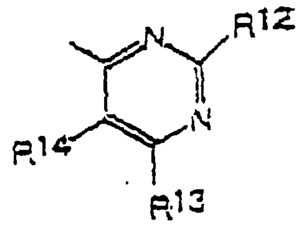

$R^{12}$, $R^{13}$ et $R^{14}$ étant identiques ou différents et signifiant un halogène, de préférence Cl ou F ou. selon le cas, $R^6$ signifie, pour le cas où $R^5$ signifie

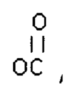

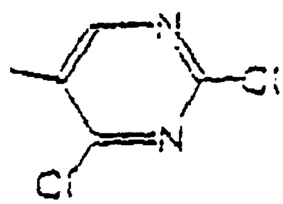

ou

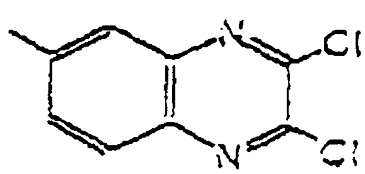

et o est un nombre entier de 0 à 12 et
m représente 0 ou 1, et
si o = 0, m = également 0.

**4.** Dérivés de cyclodextrine choisis parmi le groupe des 2,4-dichloro-1,3,5-triazinylcyclodextrines, 2-chloro-4-hydroxy-1,3,5-triazinylcyclodextrines (sels sodiques), 2-fluoro-4-hydroxy-1,3,5-triazinylcyclodextrines (sels sodiques), 2,4,5-trichloropyrimidyl-cyclodextrines, 5-chloro-2,4-difluoropyrimidylcyclodextrines, 6-(2,3-dichloro)quinoxalinoylcyclodextrines, 5-(2,4-dichloro)pyrimidinoylcyclodextrines, 2-amino-4-chloro-1,3,5-triazinylcyclodextrines, 2-chloro-4-éthylamino-1,3,5-triazinylcyclodextrines, 2-chloro-4-diéthylamino-1,3,5-triazinylcyclodextrines, 2-chloro-4-méthoxy-1,3,5-triazinylcyclodextrines.

5. Procédé pour la préparation de dérivés de cyclodextrine selon l'une quelconque des revendications 1 à 4, **caractérisé en ce qu'**on transforme de l'α-cyclodextrine native, de la β-cyclodextrine native et/ou de la γ-cyclodextrine native et/ou un dérivé approprié de l'α-cyclodextrine, de la β-cyclodextrine et/ou de la γ-cyclodextrine dans un milieu de réaction approprié, en présence d'un accepteur d'acide et, le cas échéant, d'un agent tensioactif dans un milieu faiblement acide à fortement basique à des températures de -10 à +70°C avec des hétérocycles appropriés contenant de l'azote et **en ce qu'**on traite, le cas échéant, consécutivement le tout dans une plage neutre ou faiblement basique, le cas échéant en ajoutant un tampon, de manière connue pour le reste.

6. Solutions contenant des dérivés de cyclodextrine selon l'une ou plusieurs des revendications 1 à 4, **caractérisées en ce qu'**elles présentent un pH de 7 à 9.

7. Compositions qui contiennent des dérivés de cyclodextrine selon l'une ou plusieurs des revendications 1 à 4, sous forme liée.

8. Agents de séparation sélectifs pour la chromatographie, **caractérisés en ce qu'**ils contiennent des dérivés de cyclodextrine selon l'une ou plusieurs des revendications 1 à 4 ou, selon le cas, des compositions selon la revendication 7.

9. Membranes, feuilles, films, textiles ou cuirs, auxquels des dérivés de cyclodextrine selon l'une ou plusieurs des revendications 1 à 4 sont liés par covalence.